(19) Europäisches Patentamt
European Patent Office
Office européen des brevets

(11) **EP 4 443 958 A1**

(12) **EUROPEAN PATENT APPLICATION**
published in accordance with Art. 153(4) EPC

(43) Date of publication:
**09.10.2024 Bulletin 2024/41**

(21) Application number: **22901090.5**

(22) Date of filing: **16.11.2022**

(51) International Patent Classification (IPC):
**H04W 28/16** (2009.01)     **H04W 28/06** (2009.01)
**H04W 84/12** (2009.01)

(52) Cooperative Patent Classification (CPC):
**H04W 28/06; H04W 28/16; H04W 84/12;**
Y02D 30/70

(86) International application number:
**PCT/JP2022/042562**

(87) International publication number:
**WO 2023/100657 (08.06.2023 Gazette 2023/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.12.2021 JP 2021197255**

(71) Applicant: **Panasonic Intellectual Property
Corporation
of America
Torrance, CA 90504 (US)**

(72) Inventors:
• **NAKANO, Takayuki**
  **Kadoma-shi, Osaka 571-0057 (JP)**
• **IWAI, Takashi**
  **Kadoma-shi, Osaka 571-0057 (JP)**
• **URABE, Yoshio**
  **Kadoma-shi, Osaka 571-0057 (JP)**

(74) Representative: **Grünecker Patent- und
Rechtsanwälte
PartG mbB
Leopoldstraße 4
80802 München (DE)**

(54) **COMMUNICATION DEVICE AND COMMUNICATION METHOD**

(57)    This communication device is provided with a control circuit for determining control information that corresponds to a control type set in inter-base station cooperative communication, and a transmission circuit for transmitting the control information.

FIG. 2

## Description

Technical Field

The present disclosure relates to a communication apparatus and a communication method.

Background Art

In The Institute of Electrical and Electronics Engineers (IEEE), studies have been carried out on the IEEE 802.11be standard (hereinafter also referred to as "11be") for the next generation radio Local Area Network (LAN), which is the successor to the IEEE 802.11ax standard (hereinafter also referred to as "11ax"). The IEEE 802.11ax is also referred to as "High Efficiency (HE)," and the IEEE 802.11be is also referred to as "Extremely High Throughput (EHT)."

Citation List

Non-Patent Literature

NPL 1
IEEE 802.11-19/0801r0, AP Coordination in EHT
NPL 2
IEEE 802.11-19/1534r1, Coordinated Spatial Reuse Performance Analysis
NPL 3
IEEE 802.11-20/0033r1, Coordinated Spatial Reuse Operation
NPL 4
IEEE 802.11-20/0107r1, Multi-AP coordination for spatial reuse
NPL 5
IEEE 802.11-20/0410r4, Coordinated Spatial Reuse Procedure
NPL 6
IEEE 802.11-20/0576r1, Coordinated Spatial Reuse Protocol
NPL 7
IEEE 802.11-20/0590r5, Coordinated Spatial Reuse: Focus on Downlink
NPL 8
IEEE 802.11-20/1399r1, On Joint C-SR and C-OFDMAM-AP Transmission

Summary of Invention

However, there is room for review of the efficiency of providing a notification of control information in coordination communication in radio communication, such as a wireless LAN.
Non-limiting embodiments of the present disclosure contribute to providing a communication apparatus and a communication method that are capable of improving the efficiency of providing a notification of control information in coordination communication.
A communication apparatus according to one embodiment of the present disclosure includes: a control circuit that determines control information that supports a control type that is set for inter-base station coordination communication; and a transmitter circuit that transmits the control information.
It should be noted that general or specific embodiments may be implemented as a system, an apparatus, a method, an integrated circuit, a computer program, a storage medium, or any selective combination thereof.
According to an embodiment of the present disclosure, it is possible to improve the efficiency of providing a notification of control information in coordination communication.
Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 is a diagram showing a configuration example of a Multi-AP (multi-access point, or MAP);

FIG. 2 is a block diagram showing a configuration example of part of an AP according to an embodiment of the present disclosure;

FIG. 3 is a block diagram showing a configuration example of an AP according to Embodiment 1;

FIG. 4 is a block diagram showing a configuration example of an STA according to Embodiment 1;

FIG. 5 is a table showing an example of a C-SR control type and notification information that varies depending on a control type;

FIG. 6 is a diagram showing an example of coordination communication of C-SR control type 1;

FIG. 7 is a diagram showing an example of a received power of STA a shown in FIG. 6 and a received power of STAb shown in FIG. 6;

FIG. 8 is a diagram showing an example of a control procedure in coordination communication of FIG. 6;

FIG. 9 is a diagram showing an example of coordination communication of C-SR control type 2;

FIG. 10 is a diagram showing an example of a received power of AP1 shown in FIG. 9 and a received power of AP2 shown in FIG. 9;

FIG. 11 is a diagram showing an example of a control procedure in coordination communication of FIG. 9;

FIG. 12 is a diagram showing an example of coordination communication of C-SR control type 3;

FIG. 13 is a diagram showing an example of a received power of STAa shown in FIG. 12 and a received power of AP2 shown in FIG. 12;

FIG. 14 is a diagram showing an example of a control procedure in coordination communication of FIG. 12;

FIG. 15 is a diagram showing an example of an information element that supports a control type (C-SR Control Information Element) according to Embodiment 1;

FIG. 16 is a table showing an example of a correspondence relationship between a C-SR Control Type field value and a C-SR control type (C-SR Control Type);

FIG. 17 is a diagram showing an example of an information element that supports a control type (C-SR Control Information Element) according to Embodiment 2;

FIG. 18 is a table showing an example of a correspondence relationship between a C-SR Control Type field value and a C-SR control type (C-SR Control Type);

FIG. 19 is a diagram showing an example of the format of an MAP Trigger frame according to Embodiment 3;

FIG. 20 is a table showing an example of the definition of a Type and Subtype subfield in a Frame Control field;

FIG. 21 is a table showing an example of the definition of a Control Frame Extension subfield in the Frame Control field;

FIG. 22 is a diagram showing an example of the format of an MAP Trigger frame according to Embodiment 4;

FIG. 23 is a table showing an example of the definition of a Trigger Type subfield;

FIG. 24 is a diagram showing an example of the format of an MAP Trigger frame according to Embodiment 5;

FIG. 25 is a table showing an example of the definition of a Trigger Type subfield;

FIG. 26 is a diagram showing an example of the format of an MAP Trigger frame according to Embodiment 6;

FIG. 27 is a diagram showing an example of the format of an MAP Trigger frame according to Embodiment 7;

FIG. 28A is a diagram showing an example of the format of an MAP Trigger frame according to Embodiment 8;

FIG. 28B is a diagram showing an example of the definition of a Total MAP scheme and an MAP scheme index in the format shown in FIG. 28A;

FIG. 29 is a diagram showing an example of the format of an MAP Trigger frame according to Embodiment 9;

FIG. 30 is a diagram showing an example of the format of an MAP Trigger frame according to Embodiment 10;

FIG. 31 is a diagram showing an example of a control procedure according to Embodiment 11;

FIG. 32 is a table showing a definition example of a Device Class and a support range of a C-SR Control Type according to Embodiment 12; and

FIG. 33 is a table showing a definition example of a Device Class and a support range of a C-SR Control Type according to Embodiment 12.

Description of Embodiments

Hereinafter, embodiments of the present disclosure will be described in detail with reference to the drawings.

[Multi-Access Point coordination]

For 11be, for example, application of Multi-AP (hereinafter, referred to as "MAP") coordination (hereinafter, also referred to as "coordination communication" or "inter-base station coordination communication") with which a plurality of access points (also referred to as APs: Access Points or "base stations") transmits and receives data with each terminal (also referred to as STA: Station or "non-AP STA") in a coordinated manner is under review (see, for example, NPL 1 to NPL 8).

For coordination communication in 11be, a plurality of MAP coordination schemes (Multi-AP coordination schemes) comes under review. For example, the following schemes come under review.

- Coordinated Spatial Reuse (hereinafter, which may be written as "C-SR")
- Coordinated OFDMA (hereinafter, which may be written as "C-OFDMA")
- Joint Transmissions (hereinafter, which may be written as "JT")
- Coordinated Beamforming (hereinafter, which may be written as "CBF")

A MAP coordination scheme may be interchangeably read as another term, for example, "communication type" or "MAP type".

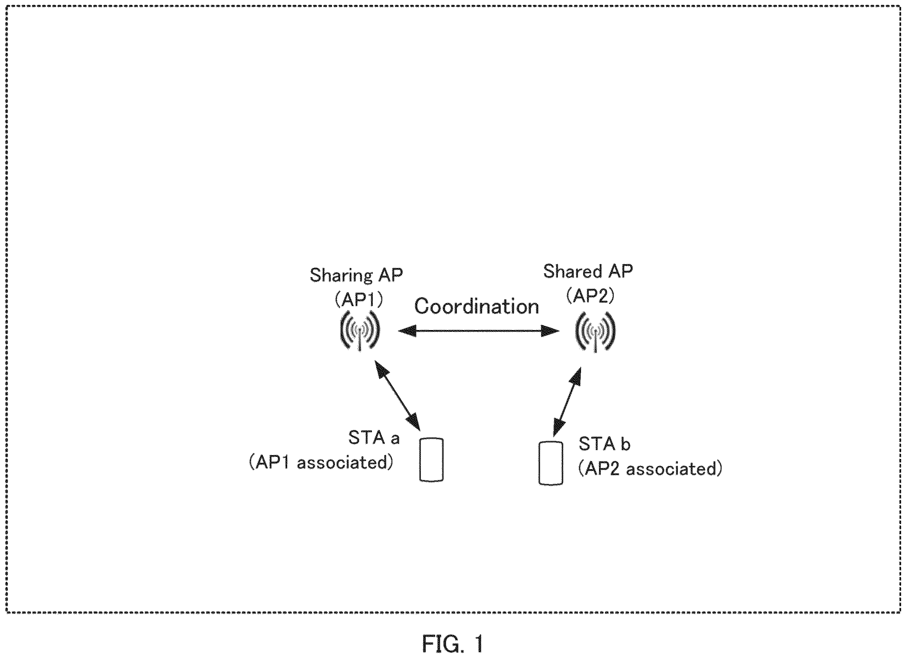

FIG. 1 is a diagram showing a configuration example of APs and STAs (a configuration example of an MAP) that perform coordination communication.

In FIG. 1, a "Sharing AP" may be, for example, an AP that starts (or controls) coordination communication by acquiring a channel use (or transmission) period (for example, TXOP: transmission opportunity). A "Shared AP" may an AP instructed by the Sharing AP to perform coordination communication.

The example shown in FIG. 1 shows a configuration in which any one of Shared APs (in the example shown in FIG. 1, AP1) also serves as a Sharing AP; however, the configuration is not limited thereto. A Sharing AP and a Shared AP may be different APs. For example, an MAP Trigger frame may be transmitted from a Sharing AP to a Shared AP. A Sharing AP may instruct a Shared AP to execute control on (for example, start) coordination communication by transmitting an MAP Trigger frame.

In the example of FIG. 1, STA a (STA a may be written as STAa) is made in association (which may be referred to as "connection") with Sharing AP (AP1) and performs communication with Sharing AP (AP1). In the example of FIG. 1, STAb (STAb may be written as STAb) is made in association with the Shared AP (AP2) and performs communication with the Shared AP (AP2). Hereinafter, APs and STAs each may be referred to as communication apparatus or may be referred to as node.

Among the above-described MAP coordination schemes, C-SR is an example of a scheme of which the configuration is easy.

In C-SR, while the communication quality between communication apparatuses (for example, between an AP and an STA) is maintained, transmission power control of an communication apparatus (for example, an AP and/or an STA) is executed such that interference from a communication apparatus different from the communication apparatus at the other end is suppressed. In the example of FIG. 1, in C-SR, while the communication quality between AP1 and STAa is maintained, transmission power control of at least one communication apparatus of AP1, AP2, STAa, and STAb is executed such that interference from AP2 and/or STAb is suppressed. In the example of FIG. 1, in C-SR, while the communication quality between AP2 and STAb is maintained, transmission power control of at least one communication apparatus of AP1, AP2, STAa, and STAb is executed such that interference from AP1 and/or STAa is suppressed.

In C-SR, various methods are under review for a control procedure and/or a transmission power control method (for example, NPL 1 to NPL 8).

In each of C-SR control procedures and/or transmission power control methods (hereinafter, which may be collectively referred to as C-SR control methods), information necessary for control is under review. However, there is room for review of a format in which a plurality of C-SR control methods is integrated and information to be controlled is efficiently exchanged (for example, a transmission format of control information).

In an embodiment of the present disclosure, for example, a method in which a C-SR control method (for example, a control type) is provided and control information is exchanged between communication apparatuses (for example, between nodes) by using the format of control information, which supports the control type, will be described. With this method, it is possible to improve the efficiency of providing a notification of control information in coordination communication.

In the following embodiments, the description will be made by way of a C-SR control type as an example; however, the present disclosure is not limited to C-SR. For example, the present disclosure may provide a control method (for example, control type) and may be applied to the control type in another MAP coordination scheme, such as the above-described C-OFDMA, JT, and CBF.

[Configuration of Radio Communication System]

A radio communication system according to the present embodiments may include, for example, APs 100 and STAs 200. AP 100 may, for example, have the function of both a Sharing AP and a Shared AP or may have the function of one of both.

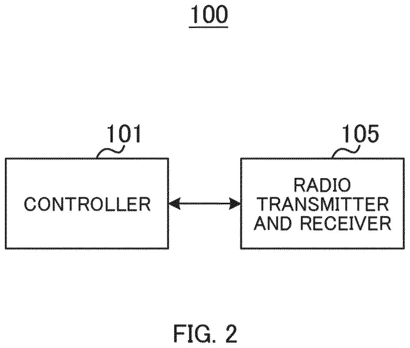

FIG. 2 is a block diagram showing a configuration example of a part of AP 100 according to an embodiment of the present disclosure. AP 100 shown in FIG. 2 is an example of a communication apparatus. In AP 100 shown in FIG.

2, controller 101 (which corresponds to, for example, a control circuit) determines control information that supports a control type set in inter-base station coordination communication (for example, MAP). Radio transmitter and receiver 105 (which corresponds to, for example, a transmitter circuit) transmits control information.

(Embodiment 1)

[Configuration Example of AP 100]

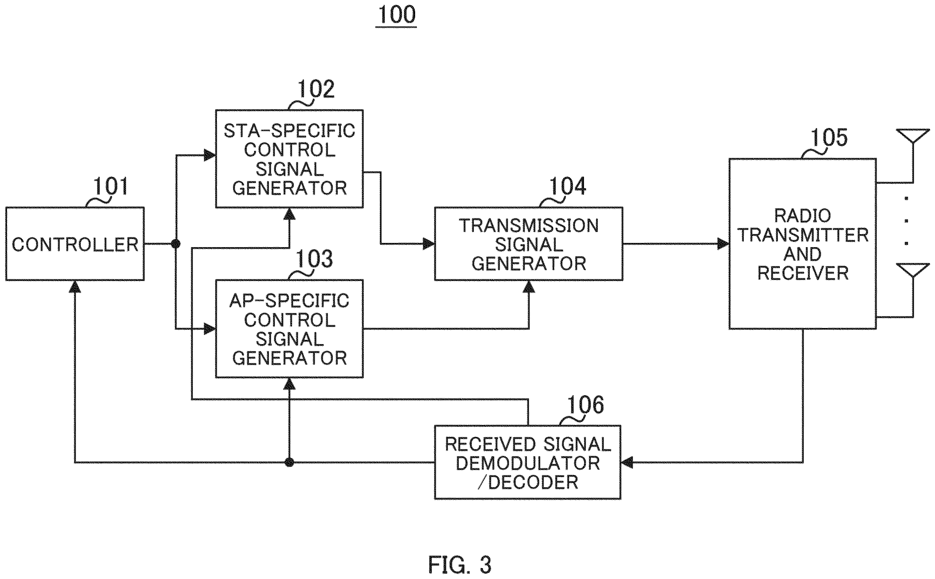

FIG. 3 is a block diagram showing a configuration example of AP 100 according to Embodiment 1. AP 100 shown in FIG. 3 may include, for example, controller 101, STA-specific control signal generator 102, AP-specific control signal generator 103, transmission signal generator 104, radio transmitter and receiver 105, and received signal demodulator/decoder 106.

Controller 101 may, for example, control setting of a transmission frame (or signal) including an MAP Trigger frame. For example, when AP 100 is a Sharing AP, controller 101 may control generation of a control signal (for example, an MAP Trigger frame) for other AP 100 (for example, a Shared AP). For example, controller 101 may determine the format of an MAP Trigger frame based on a C-SR control type. When, for example, AP 100 is a Shared AP, controller 101 may identify the format of an MAP Trigger frame transmitted from other AP 100 (for example, a Sharing AP) based on information on a C-SR control type in the MAP Trigger frame.

An example of the format of an MAP Trigger frame will be described later.

Controller 101 may, for example, set control information for STA 200 or other AP 100. For example, controller 101 may set resource allocation information for each STA 200 and scheduling information, such as MCS (Modulation and Coding Scheme). Controller 101 may, for example, determine a parameter on transmission control (for example, a parameter on the above-described coordination communication) based on information input from received signal demodulator/decoder 106 (for example, a notification of control information, provided from a Sharing AP to a Shared AP). Controller 101 may, for example, output control information including the determined transmission control parameter to STA-specific control signal generator 102 and AP-specific control signal generator 103.

STA-specific control signal generator 102 may, for example, generate a control signal specific to STA 200 (for example, a Trigger frame) and output the generated control signal to transmission signal generator 104.

AP-specific control signal generator 103 may, for example, generate a control signal specific to AP 100 (for example, an MAP Trigger frame). For example, AP-specific control signal generator 103 may generate a control signal based on control information input from controller 101 and information input from received signal demodulator/decoder 106.

A control signal specific to AP 100 may, for example, include at least one of pieces of control information on coordination communication (for example, the above-described information indicating a C-SR control type, information not dependent on a C-SR control type, or information dependent on a C-SR control type) in addition to time and frequency resource information (for example, RU allocation information for up coordination communication, TXOP, LENGTH, and the like). AP-specific control signal generator 103, for example, outputs the generated control signal to transmission signal generator 104.

The term "dependent" on a C-SR control type may be, for example, read as "based on" a C-SR control type. The term "not dependent" on a C-SR control type may be, for example, read as another term "not based" on or "independent" of a C-SR control type.

Transmission signal generator 104 may, for example, perform transmission processing on a control signal input from STA-specific control signal generator 102 or AP-specific control signal generator 103 or data and ACK/Block-ACK and generate a radio frame (transmission signal). Transmission signal generator 104 outputs the generated transmission signal to radio transmitter and receiver 105.

Radio transmitter and receiver 105, for example, performs radio transmission processing, including D/A conversion and up-conversion to a carrier frequency, on a transmission signal input from transmission signal generator 104 and transmits, via an antenna, the signal subjected to radio transmission processing.

When, for example, AP 100 receives an uplink signal transmitted from STA 200 or a control signal transmitted from other AP 100, AP 100 may operate as follows.

A radio signal received via the antenna is input to radio transmitter and receiver 105. Radio transmitter and receiver 105, for example, performs radio reception processing, including down conversion of a carrier frequency, on the received radio signal and outputs the signal subjected to radio reception processing, to received signal demodulator/decoder 106.

Received signal demodulator/decoder 106 may, for example, perform processing, including autocorrelation processing, on the signal input from radio transmitter and receiver 105 and extract the received radio frame. Received signal demodulator/decoder 106 may, for example, decode and demodulate an uplink signal (for example, a response signal or feedback information) from STA 200, contained in the extracted radio frame, or a control signal (for example, an MAP Trigger frame) from other AP 100, contained in the extracted radio frame. Received signal demodulator/decoder 106 may, for example, output the demodulated control signal to controller 101, STA-specific control signal generator 102, and AP-specific control signal generator 103.

[Configuration Example of STA 200]

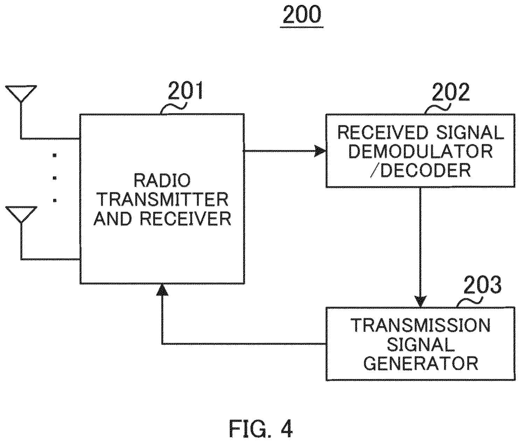

FIG. 4 is a block diagram showing a configuration example of STA 200 according to Embodiment 1. STA 200 shown in FIG. 4 may include, for example, radio transmitter and receiver 201, received signal demodulator/decoder 202, and transmission signal generator 203.

Radio transmitter and receiver 201, for example, receives via an antenna a signal transmitted from AP 100, performs radio reception processing, including down conversion and A/D (Analog to Digital) conversion, on the received signal, and outputs the signal subjected to radio reception processing, to received signal demodulator/decoder 202. Radio transmitter and receiver 201, for example, performs radio transmission processing, including D/A (Digital to Analog) conversion and up-conversion to a carrier frequency, on a signal input from transmission signal generator 203 and transmits, via the antenna, the signal subjected to radio transmission processing.

Received signal demodulator/decoder 202 may, for example, perform processing, including autocorrelation processing, on the signal input from radio transmitter and receiver 201 and extract the received radio frame. Received signal demodulator/decoder 202 may, for example, demodulate and decode a control signal (for example, a Trigger frame) contained in the extracted radio frame and acquire an up transmission control parameter. Received signal demodulator/decoder 202 may, for example, output the acquired up transmission control parameter to transmission signal generator 203.

Transmission signal generator 203 may, for example, perform transmission signal processing on an uplink signal (for example, a response signal) based on the up transmission control parameter input from received signal demodulator/decoder 202 and generate a radio frame (transmission signal). Transmission signal generator 203, for example, outputs the generated transmission signal to radio transmitter and receiver 201.

[Example of Control Type and Notification Information]

Next, an example of a control type and notification information according to Embodiment 1 will be described.

In Embodiment 1, a control type (hereinafter, which may be referred to as C-SR control type) is provided in relation to a C-SR control method. Then, the format of control information, which supports a control type (for example, an information element (C-SR Control Information Element)), is defined. Between communication apparatuses (APs and/or STAs), control information (for example, control information on C-SR control) is exchanged by applying the format of control information, which supports a control type.

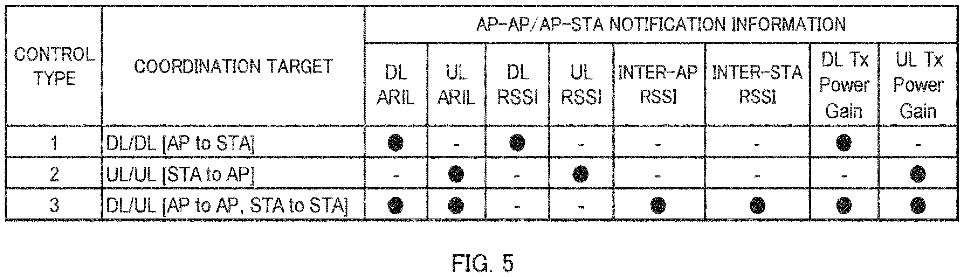

FIG. 5 is a table showing an example of a C-SR control type and notification information that varies depending on a control type. In FIG. 5, three C-SR control types and notification information for each control type are associated. Three C-SR control types and notification information will be described later.

Hereinafter, a C-SR control type will be described based on a configuration example of APs and STAs (a configuration example of MAP) shown in FIG. 1, for example. A communication link between AP1 and STAa in FIG. 1 is written as AP1-STAa, and a communication link between AP2 and STAb is written as AP2-STAb.

The present disclosure is not limited to the configuration example shown in FIG. 1. For example, the number of APs may be one or may be three or more. The number of STAs may be one or may be three or more.

"DL/DL" that is a coordination target in C-SR control type 1 corresponds to that DownLink (DL) communication is performed in AP1-STAa, and DL communication is performed in AP2-STAb. In other words, in C-SR control type 1, AP1 transmits a DL signal to STAa, and AP2 transmits a DL signal to STAb. In this case, when STAa receives a DL signal from AP1, the DL signal transmitted by AP2 becomes interference. In this case, when STAb receives a DL signal from AP2, the DL signal transmitted by AP1 becomes interference. In other words, in this case, interference from AP to STA (interference in DL) can occur.

Then, as shown in FIG. 5, in C-SR control type 1, a notification of DL ARIL (Acceptable Receiver Interference Level), DL RSSI (Received Signal Strength Indicator), and DL Tx Power Gain is provided as information in DL. DL Tx Power Gain indicates the coefficient of change in transmission power (for example, AP transmission power) in DL.

"UL/UL" that is a coordination target in C-SR control type 2 corresponds to that UpLink (UL) communication is performed in AP1-STAa, and UL communication is performed in AP2-STAb. In other words, in C-SR control type 2, STAa transmits a UL signal to AP1, and STAb transmits a UL signal to AP2. In this case, when AP1 receives a UL signal from STAa, a UL signal transmitted by STAb becomes interference. In this case, when AP2 receives a UL signal from STAb, a UL signal transmitted by STAa becomes interference. In other words, in this case, interference from STA to AP (interference in UL) can occur.

Then, as shown in FIG. 5, in C-SR control type 2, a notification of UL ARIL, UL RSSI, and UL Tx Power Gain is provided as information in UL. UL Tx Power Gain indicates the coefficient of change in transmission power (for example, STA transmission power) in UL.

"DL/UL" that is a coordination target in C-SR control type 3 corresponds to that DL communication is performed in AP1-STAa, and UL communication is performed in AP2-STAb. In other words, in C-SR control type 3, AP1 transmits a DL signal to STAa, and STAb transmits a UL signal to AP2. In this case, when STAa receives a DL signal from AP1, the UL signal transmitted by STAb becomes interference. In this case, when AP2 receives a UL signal from STAb, a DL signal transmitted by AP1 becomes interference. In other words, in this case, interference from an AP to another AP different from the AP and/or interference from an STA to another STA different from the STA can occur.

Then, as shown in FIG. 5, in C-SR control type 3, a notification of DL ARIL, UL ARIL, inter-AP RSSI, inter-STA RSSI, DL Tx Power Gain, and UL Tx Power Gain is provided. Hereinafter, each of the three control types will be described.

[C-SR Control Type 1]

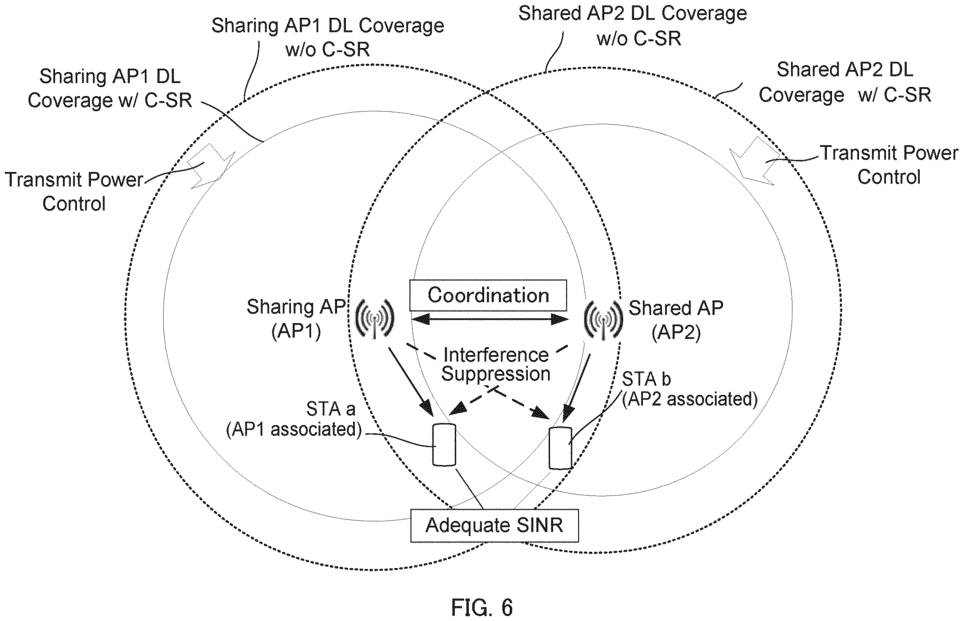

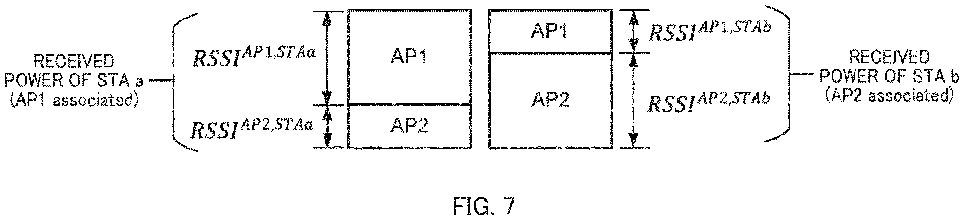

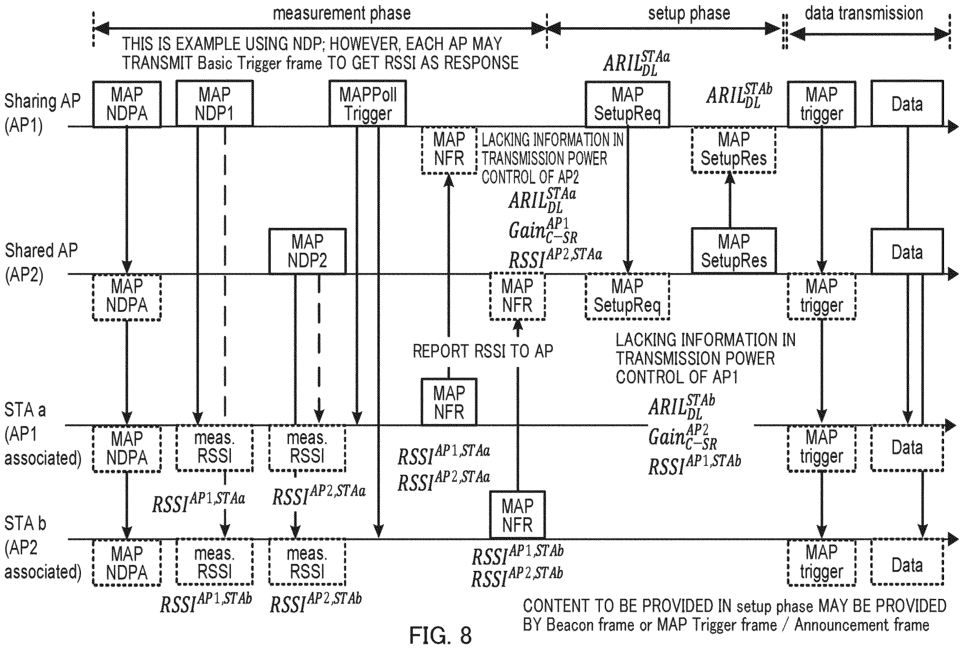

FIG. 6 is a diagram showing an example of coordination communication of C-SR control type 1. FIG. 7 is a diagram showing an example of a received power of STA a shown in FIG. 6 and a received power of STA b shown in FIG. 6. FIG. 8 is a diagram showing an example of a control procedure in coordination communication of FIG. 6.

FIG. 6 is an example in which DL communication is performed from Sharing AP (AP1) to STA a and DL communication is performed from Shared AP (AP2) to STAb. DL communication in AP1-STAa and DL communication in AP2-STAb are, for example, performed at the same time. In this case, as shown in FIG. 6, while the communication quality of DL communication in AP1-STAa and DL communication in AP2-STAb is maintained, transmission power control of AP1 and/or AP2 is executed such that interference from AP1 to STAb where no communication is established and/or interference from AP2 to STAa where no communication is established is suppressed.

A signal to noise power ratio (SNR (Signal to Noise Ratio)) of each of STA a and STAb before C-SR control is executed is calculated as expressed by equation 1 based on the example of received power shown in FIG. 7. Hereinafter, an example in which a noise component of the SNR of a communication apparatus (for example, STA a) that performs coordination communication includes interference from another communication apparatus (AP2 in the example of FIG. 6) in coordination communication and does not include a component different from the interference (for example, white noise or the like) will be described. However, the present disclosure is not limited thereto. For example, the noise component of the SNR may include a component different from interference (for example, white noise or the like).

[1]

$$SNR_{nonCSR}^{STAa} = \frac{RSSI^{AP1,STAa}}{RSSI^{AP2,STAa}}$$

$$SNR_{nonCSR}^{STAb} = \frac{RSSI^{AP2,STAb}}{RSSI^{AP1,STAb}}$$

$$(1) \text{ ... (Equation 1)}$$

In equation 1, $SNR_{nonCSR}^{STAm}$ denotes the SNR of STAm (m is a or b) before C-SR control is executed, and $RSSI^{APn,STAm}$ denotes RSSI of a signal that STAm has received from APn (n is 1 or 2).

A desired SNR after C-SR control (when, for example, C-SR control is executed) is defined as equation 2.

[2]

$$SNR_{min}^{MCS_{STAa}} = \frac{RSSI^{AP1,STAa} \cdot Gain_{C-SR}^{AP1}}{ARIL_{DL}^{STAa}}$$

$$SNR_{min}^{MCS_{STAb}} = \frac{RSSI^{AP2,STAb} \cdot Gain_{C-SR}^{AP2}}{ARIL_{DL}^{STAb}}$$

$$(2) \text{ ... (Equation 2)}$$

Here, $MCS_{STAm}$ (which may be written as MCS_STAm) denotes a specific MCS in STAm. $SNR_{min}^{MCS\_STAm}$ denotes an SNR for which a specific error rate is guaranteed when a specific MCS is used in STAm (when STAm performs reception processing on a signal of a specific MCS). A specific error rate is, for example, a packet error rate (PER) of 10%. $Gain_{C-SR}^{APn}$ denotes the coefficient of change (for example, gain) in transmission power when C-SR control is executed in APn. $ARIL^{STAm}_{DL}$ denotes an acceptable receiver interference level in STAm that performs DL communication.

An acceptable receiver interference level in each of STA a and STAb is calculated by using equation 3 obtained based on equation 2.

[3]

$$ARIL^{STAa}_{DL} = \left(RSSI^{AP1,STAa} \cdot Gain^{AP1}_{C-SR}\right)/SNR^{MCS_{STAa}}_{min}$$

$$ARIL^{STAb}_{DL} = \left(RSSI^{AP2,STAb} \cdot Gain^{AP2}_{C-SR}\right)/SNR^{MCS_{STAb}}_{min}$$

$$(3) \quad ...$$

(Equation 3)

Regarding the coefficient of change in transmission power of each of AP1 and AP2, with which the SNR of each of STAa and STAb before C-SR control becomes a desired SNR (for example, equation 2) after C-SR control, the relationship of equation 4 holds.

[4]

$$Gain^{AP2}_{C-SR} = ARIL^{STAa}_{DL}/\left(RSSI^{AP2,STAa} \cdot Gain^{AP1}_{C-SR}\right)$$
$$Gain^{AP1}_{C-SR} = ARIL^{STAb}_{DL}/\left(RSSI^{AP1,STAb} \cdot Gain^{AP2}_{C-SR}\right)$$

$$(4) \quad ... \text{(Equation 4)}$$

Then, a transmission power of each of AP 1 and AP2 after C-SR control is calculated as expressed by equation 5 by using a transmission power $Tx^{APn}_{pwr}$ before C-SR control.

[5]

$$\text{(Transmission Power of AP1 after C-SR Control)} = Tx^{AP1}_{pwr} \cdot Gain^{AP1}_{C-SR}$$

$$\text{(Transmission Power of AP2 after C-SR Control)} = Tx^{AP2}_{pwr} \cdot Gain^{AP2}_{C-SR} \quad ... \text{(Equation 5)}$$

As expressed by above-described Equation 4 and the like, $ARIL^{STAb}_{DL}$, $Gain^{AP2}_{C-SR}$, and $RSSI^{AP1,STAb}$ are used to calculate the coefficient of change $Gain^{AP1}_{C-SR}$ in transmission power. $ARIL^{STAa}_{DL}$, $Gain^{AP1}_{C-SR}$, and $RSSI^{AP2,STAa}$ are used to calculate the coefficient of change $Gain^{AP2}_{C-SR}$ in transmission power. $Gain^{AP1}_{C-SR}$ is calculated by AP1, and $Gain^{AP2}_{C-SR}$ is calculated by AP2. Therefore, at least one or some of $ARIL^{STAm}_{DL}$, $Gain^{APn}_{C-SR}$, and $RSSI^{APn,STAm}$ are exchanged between AP1 and AP2.

$ARIL^{STAb}_{DL}$ and $ARIL^{STAa}_{DL}$ are an example of "DL ARIL" (see FIG. 5), $RSSI^{AP1,STAb}$ and $RSSI^{AP2,STAa}$ are an example of "DL RSSI" (see FIG. 5), and $Gain^{AP1}_{C-SR}$ and $Gain^{AP2}_{C-SR}$ are an example of "DL Tx Power Gain" (see FIG. 5).

In the example of the control procedure shown in FIG. 8, a measurement phase, a setup phase, and a section in which data transmission is performed in coordination communication (data transmission) are sequentially shown. A measurement phase is a time section in which measurement of RSSI or the like between an AP and an STA and a notification of a measurement result are performed, and a setup phase is a time section in which lacking information for performing coordination communication is exchanged between nodes.

The term "phase" may be interchangeably read as another term, for example, "period", "sequence", or "procedure".

In a measurement phase, the specifications of measurement that an STA performs upon receiving an NDP (Null data PPDU) transmitted from each AP in MAP NDPA (Null data PPDU (Physical Layer Protocol Data Unit) Announcement) are designated. In the example shown in FIG. 8, AP1 transmits an NDP (MAP NDP1 of FIG. 8), and each of STA a and STA b receives the MAP NDP1 and measures the RSSI of the signal received from AP1 (hereinafter, written as "RSSI from API "). AP2 transmits an NDP (MAP NDP2 of FIG. 8), and each of STA a and STAb receives the MAP NDP2 and measures the RSSI of the signal received from AP2 (hereinafter, written as "RSSI from AP2"). Sharing AP (AP1) transmits, to each STA, an MAP Poll Trigger requesting feedback of the measured RSSI and receives, from each STA, an MAP NFR (NDP Feedback Report) that is an MAP NFR. In the example of FIG. 8, APs to which STAs are respectively connected are instructed to receive information of RSSI. In other words, AP1 receives information of RSSI from STA a connected to AP1, and AP2 receives information of RSSI from STA b connected to AP2. The information of RSSI that AP1 receives from STA a may include RSSI from AP1 ($RSSI^{AP1,STAa}$) and RSSI from AP2 ($RSSI^{AP2,STAa}$).

FIG. 8 shows an example of RSSI measurement using an NDP in a measurement phase. Alternatively, each AP may transmit a Basic Trigger frame, and an STA may provide the AP with RSSI as a response.

When the coefficient of change in transmission power is calculated in each AP, information used to calculate the coefficient of change in transmission power is lacking in each AP. For example, in AP1, $ARIL^{STAb}_{DL}$, $Gain^{AP2}_{C-SR}$, and $RSSI^{AP1,STAb}$ are lacking. In AP2, $ARIL^{STAa}_{DL}$, $Gain^{AP1}_{C-SR}$, and $RSSI^{AP2,STAa}$ are lacking.

For this reason, lacking information is exchanged in a setup phase. In the example of FIG. 8, AP1 provides a notification of information lacking in AP2 to AP2 in an MAP setup request frame (MAP SetupReq). Then, AP2 provides a notification of information lacking in AP1 to AP1 in an MAP setup response frame (MAP SetupRes) as a response to the MAP SetupReq. Through the notification in the setup phase, each AP can calculate the coefficient of change in transmission power. Then, in a section in which data transmission is performed, each AP is capable of performing DL data transmission by using transmission power subjected to C-SR control.

[C-SR Control Type 2]

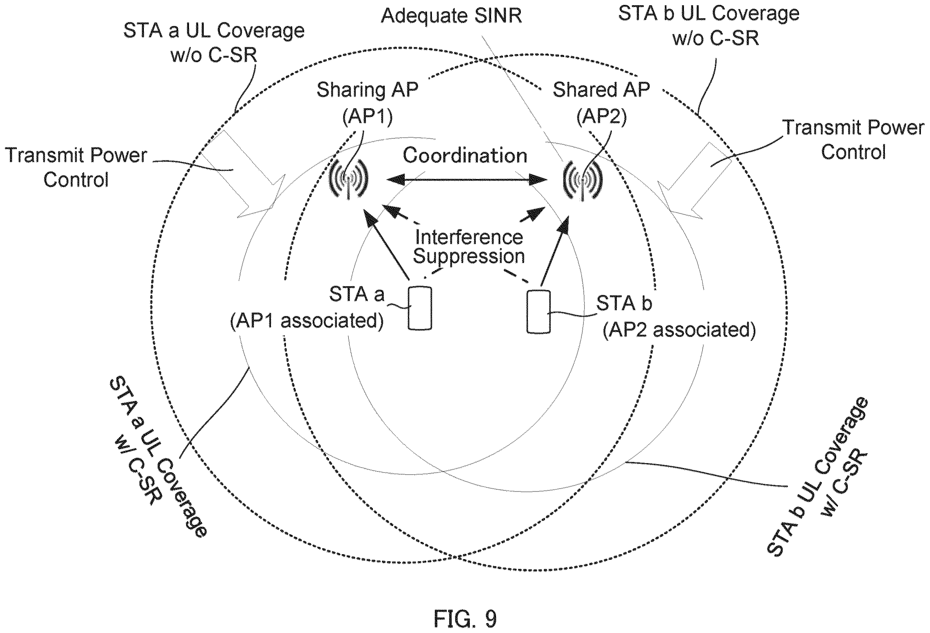

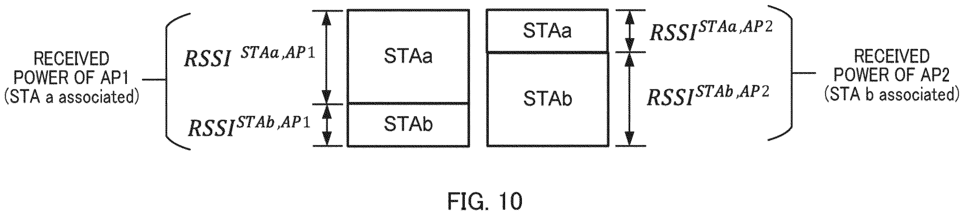

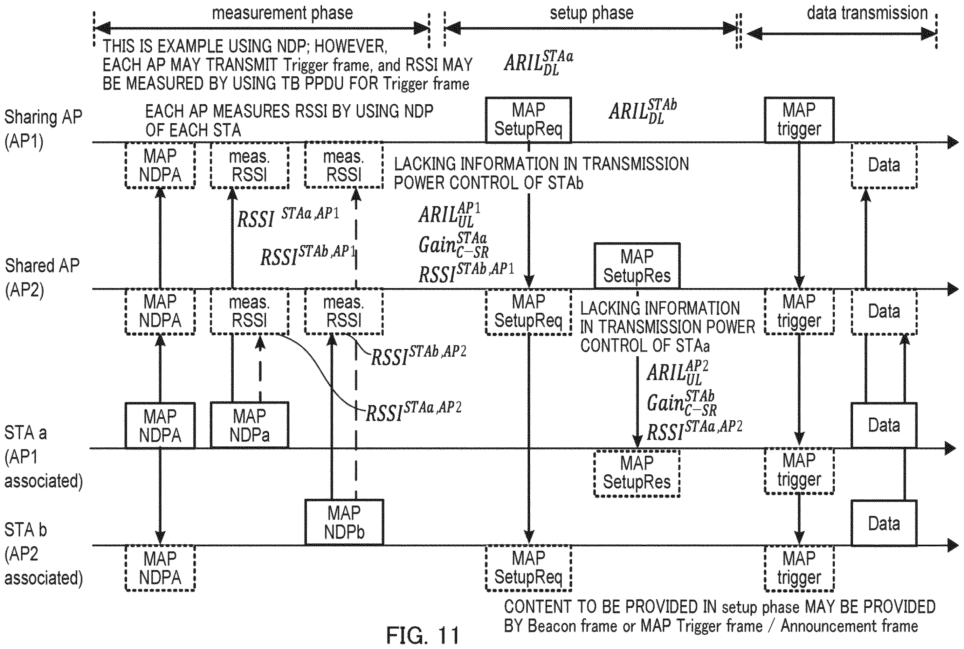

FIG. 9 is a diagram showing an example of coordination communication of C-SR control type 2. FIG. 10 is a diagram showing an example of a received power of AP1 shown in FIG. 9 and a received power of AP2 shown in FIG. 9. FIG. 11 is a diagram showing an example of a control procedure in coordination communication of FIG. 9.

FIG. 9 is an example in which UL communication is performed from STA a to Sharing AP (AP1) and UL communication is performed from STA b to Shared AP (AP2). UL communication in AP1-STAa and UL communication in AP2-STAb are, for example, performed at the same time. In this case, as shown in FIG. 9, while the communication quality of UL communication in AP1-STAa and UL communication in AP2-STAb is maintained, transmission power control of STAa and/or STAb is executed such that interference from STAb to AP1 where no communication is established and/or interference from STA a to AP2 where no communication is established is suppressed.

The SNR of each of AP1 and AP2 before C-SR control is executed is calculated as expressed by equation 6 based on the example of received power shown in FIG. 10.

[6]

$$SNR^{AP1}_{nonCSR} = \frac{RSSI^{STAa,AP1}}{RSSI^{STAb,AP1}}$$

$$SNR^{AP2}_{nonCSR} = \frac{RSSI^{STAb,AP2}}{RSSI^{STAa,AP2}}$$

$$(6)\text{... (Equation 6)}$$

In equation 6, $SNR^{APm}_{nonCSR}$ denotes the SNR of APn (n is 1 or 2) before C-SR control is executed, and $RSSI^{STAm,APn}$ denotes the RSSI of a signal that APn has received from STAm (m is a or b).

A desired SNR after C-SR control (for example, when C-SR control is executed) is defined as equation 7.

[7]

$$SNR^{MCS_{AP1}}_{min} = \frac{RSSI^{STAa,AP1} \cdot Gain^{STAa}_{C-SR}}{ARIL^{AP1}_{UL}}$$

$$SNR^{MCS_{AP2}}_{min} = \frac{RSSI^{STAb,AP2} \cdot Gain^{STAb}_{C-SR}}{ARIL^{AP2}_{UL}}$$

$$(7)\text{... (Equation 7)}$$

Here, $MCS_{APn}$ (which may be written as MCS_APn) denotes a specific MCS in APn. $SNR^{MCS\_APn}_{min}$ denotes an SNR at which a specific error rate is guaranteed when a specific MCS is used in APn. A specific error rate is, for example, a packet error rate (PER) of 10%. $Gain^{STAm}_{C-SR}$ denotes the coefficient of change (for example, gain) in transmission power when C-SR control is executed in STAm. $ARIL^{APn}_{UL}$ denotes an acceptable receiver interference level in APn that performs UL communication.

An acceptable receiver interference level in each of AP1 and AP2 is calculated by using equation 8 based on equation 7.

[8]

$$ARIL^{AP1}_{UL} = \left(RSSI^{STAa,AP1} \cdot Gain^{STAa}_{C-SR}\right)/SNR^{MCS_{AP1}}_{min}$$

$$ARIL^{AP2}_{UL} = \left(RSSI^{STAb,AP2} \cdot Gain^{STAb}_{C-SR}\right)/SNR^{MCS_{AP2}}_{min}$$

$$(8) \ ... \text{(Equation 8)}$$

Regarding the coefficient of change in transmission power of each of STAa and STAb of which the SNR of each of AP1 and AP2 before C-SR control becomes a desired SNR (for example, equation 7) after C-SR control, the relationship of equation 9 holds.

[9]

$$Gain^{STAb}_{C-SR} = ARIL^{AP1}_{UL}/\left(RSSI^{STAb,AP1} \cdot Gain^{STAa}_{C-SR}\right)$$
$$Gain^{STAa}_{C-SR} = ARIL^{AP2}_{UL}/\left(RSSI^{STAa,AP2} \cdot Gain^{STAb}_{C-SR}\right)$$

$$(9) \ ... \text{(Equation 9)}$$

Then, a transmission power of each of STAa and STAb after C-SR control is calculated as expressed by equation 10 by using a transmission power $Tx^{STAm}_{pwr}$ before C-SR control.

[10]

$$\text{(Transmission Power of STAa after C-SR Control)} = Tx^{STAa}_{pwr} \cdot Gain^{STAa}_{C-SR}$$

$$\text{(Transmission Power of STAb after C-SR Control)} = Tx^{STAb}_{pwr} \cdot Gain^{STAb}_{C-SR} \quad ... \text{(Equation 10)}$$

As expressed by above-described equation 9 and the like, $ARIL^{AP2}_{UL}$, $Gain^{STAb}_{C-SR}$, and $RSSI^{STAa,AP2}$ are used to calculate the coefficient of change $Gain^{STAa}_{C-SR}$ in transmission power. $ARIL^{AP1}_{UL}$, $Gain^{STAa}_{C-SR}$, and $RSSI^{STAb,AP1}$ are used to calculate the coefficient of change $Gain^{STAb}_{C-SR}$ in transmission power. $Gain^{STAa}_{C-SR}$ is calculated by STAa, and $Gain^{STAb}_{C-SR}$ is calculated by STAb. Therefore, at least one or some of $ARIL^{APn}_{UL}$, $Gain^{STAm}_{C-SR}$, and $RSSI^{STAm,APn}$ are exchanged between STAa and STAb.

$ARIL^{AP2}_{UL}$ and $ARIL^{AP1}_{UL}$ are an example of "ULARIL" (see FIG. 5), $RSSI^{STAa,AP2}$ and $RSSI^{STAb,AP1}$ are an example of "UL RSSI" (see FIG. 5), and $Gain^{STAb}_{C-SR}$ and $Gain^{STAa}_{C-SR}$ are an example of "UL Tx Power Gain" (see FIG. 5).

In the example of the control procedure shown in FIG. 11, a measurement phase, a setup phase, and a section in which data transmission is performed in coordination communication (data transmission) are sequentially shown. A measurement phase is a time section in which measurement of RSSI or the like between an STA and an AP and a notification of a measurement result are performed, and a setup phase is a time section in which lacking information for performing coordination communication is exchanged between nodes.

In a measurement phase, the specifications of measurement that an AP performs upon receiving an NDP transmitted from each STA in MAP NDPA are designated. In the example shown in FIG. 11, STA a transmits an NDP (MAP NDPa of FIG. 11), and each of AP1 and AP2 receives the MAP NDPa and measures the RSSI of the signal received from STAa (hereinafter, written as "RSSI from STAa"). STAb transmits an NDP (MAP NDPb of FIG. 11), and each of AP1 and AP2 receives the MAP NDPb and measures the RSSI of the signal received from STAb (hereinafter, written as "RSSI from STAb").

FIG. 11 shows an example of RSSI measurement using an NDP in a measurement phase. Alternatively, each STA may transmit a TB PPDU (triggered-based PPDU) for a Trigger frame from each AP, and each AP may measure RSSI using the TB PPDU.

When the coefficient of change in transmission power is calculated in each STA, information used to calculate the coefficient of change in transmission power is lacking in each STA. For example, in STAa, $ARIL^{AP2}_{UL}$, $Gain^{STAb}_{C\text{-}SR}$, and $RSSI^{STAa,AP2}$ are lacking. In STAb, $ARIL^{AP1}_{UL}$, $Gain^{STAa}_{C\text{-}SR}$, and $RSSI^{STAb,AP1}$ are lacking.

For this reason, lacking information is exchanged in a setup phase. In the example of FIG. 11, AP1 provides a notification of information lacking in STAb to STAb in an MAP setup request frame (MAP SetupReq) via AP2. Then, AP2 provides a notification of information lacking in STAa to STAa in an MAP setup response frame (MAP SetupRes) as a response to the MAP SetupReq. Through the notification in the setup phase, each STA can calculate the coefficient of change in transmission power. Then, in a section in which data transmission is performed, each STA is capable of performing UL data transmission by using transmission power subjected to C-SR control.

[C-SR Control Type 3]

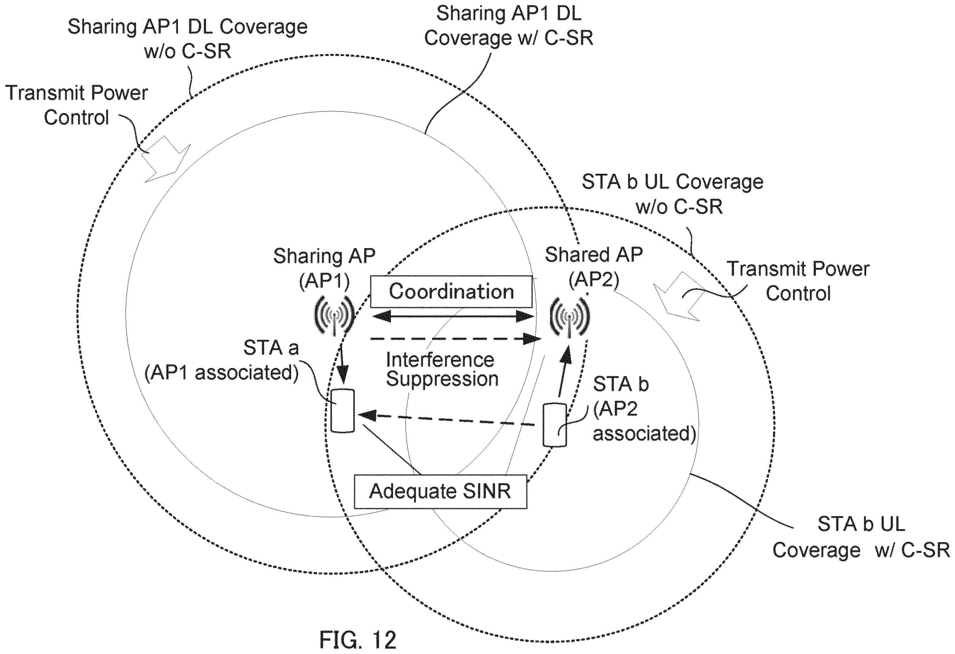

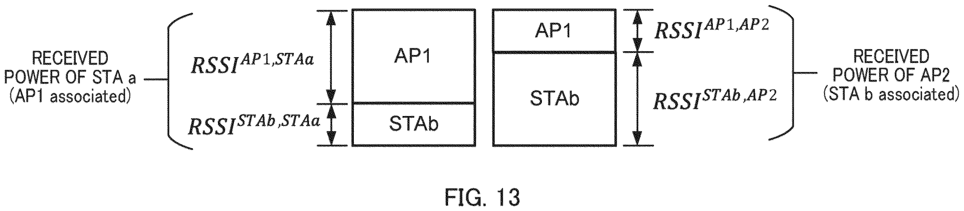

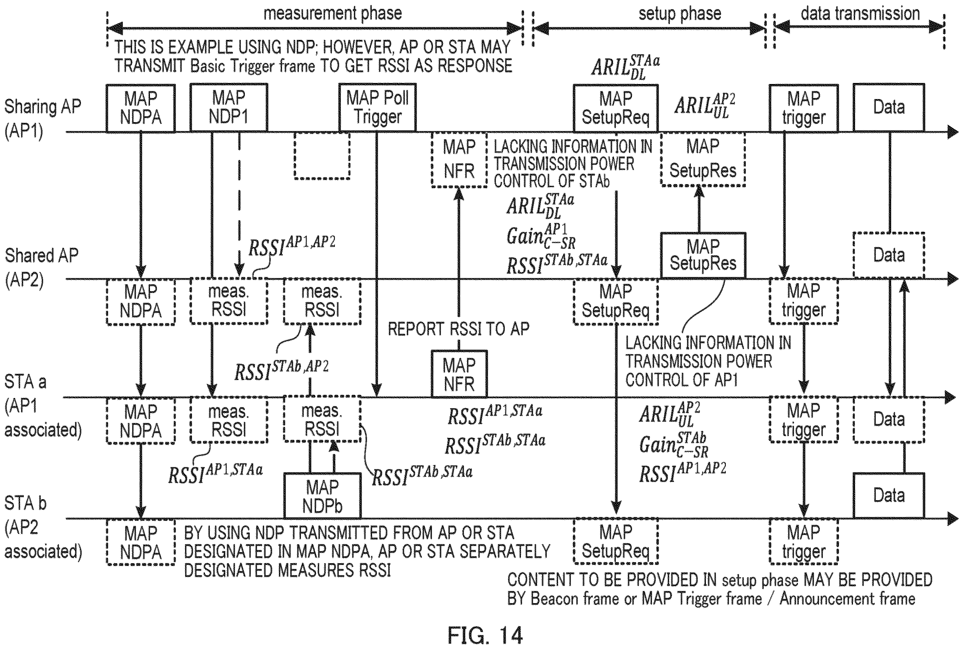

FIG. 12 is a diagram showing an example of coordination communication of C-SR control type 3. FIG. 13 is a diagram showing an example of a received power of STA a shown in FIG. 12 and a received power of AP2 shown in FIG. 12. FIG. 14 is a diagram showing an example of a control procedure in coordination communication of FIG. 12.

FIG. 12 is an example in which DL communication is performed from Sharing AP (AP1) to STA a and UL communication is performed from STAb to Shared AP (AP2). DL communication in AP1-STAa and UL communication in AP2-STAb are, for example, performed at the same time. In this case, as shown in FIG. 12, while the communication quality of DL communication in AP1-STAa and UL communication in AP2-STAb is maintained, transmission power control of AP1 and/or STAb is executed such that interference from AP1 to AP2 where no communication is established and/or interference from STAb to STAa where no communication is established is suppressed.

The SNR of each of STAa and AP2 before C-SR control is executed is calculated as expressed by equation 11 based on the example of received power shown in FIG. 13.

[11]

$$SNR^{STAa}_{nonCSR} = \frac{RSSI^{AP1,STAa}}{RSSI^{STAb,STAa}}$$

$$SNR^{AP2}_{nonCSR} = \frac{RSSI^{STAb,AP2}}{RSSI^{AP1,AP2}}$$

$$(1\ 1) \ldots \text{(Equation 11)}$$

In equation 11, $SNR^{STAa}_{nonCSR}$ and $SNR^{AP2}_{nonCSR}$ respectively denote the SNR of STAa and the SNR of AP2 before C-SR control is executed, $RSSI^{STAb,AP2}$ denotes the RSSI of a signal that AP2 has received from STAb, $RSSI^{AP1,STAa}$ denotes the RSSI of a signal that STAa has received from AP1, $RSSI^{STAb,STAa}$ denotes the RSSI of a signal that STAa has received from STAb, and $RSSI^{AP1,AP2}$ denotes the RSSI of a signal that AP2 has received from AP1.

A desired SNR after C-SR control (for example, when C-SR control is executed) is defined as equation 12.

[12]

$$SNR^{MCS_{STAa}}_{min} = \frac{RSSI^{AP1,STAa} \cdot Gain^{AP1}_{C\text{-}SR}}{ARIL^{STAa}_{DL}}$$

$$SNR^{MCS_{AP2}}_{min} = \frac{RSSI^{STAb,AP2} \cdot Gain^{STAb}_{C\text{-}SR}}{ARIL^{AP2}_{UL}}$$

$$(1\ 2) \ldots \text{(Equation 12)}$$

Here, $MCS_{STAa}$ (which may be written as MCS_STAa) indicates a specific MCS in STAa. $SNR^{MCS\_STAa}_{min}$ denotes an SNR at which a specific error rate is guaranteed when a specific MCS is used in STAa. A specific error rate is, for example, a packet error rate (PER) of 10%. $Gain^{AP1}_{C\text{-}SR}$ denotes the coefficient of change (for example, gain) in transmission power when C-SR control is executed in AP1. $ARIL^{STAa}_{DL}$ denotes an acceptable receiver interference level in STAa that performs DL communication. Here, $MCS_{AP2}$ (which may be written as MCS_AP2) indicates a specific MCS in AP2. $SNR^{MCS\_AP2}_{min}$ denotes an SNR at which a specific error rate is guaranteed when a specific MCS is used in AP2. A specific error rate is, for example, a packet error rate (PER) of 10%. $Gain^{STAb}_{C\text{-}SR}$ denotes the coefficient of change (for example, gain) in transmission power when C-SR control is executed in STAb. $ARIL^{AP2}_{UL}$ denotes an acceptable receiver interference level in AP2 that performs UL communication.

An acceptable receiver interference level in each of STAa and AP2 is calculated by using equation 13 obtained based on equation 12.

[13]

$$ARIL_{DL}^{STAa} = \left(RSSI^{AP1,STAa} \cdot Gain_{C-SR}^{AP1}\right)/SNR_{min}^{MCS_{STAa}}$$

$$ARIL_{UL}^{AP2} = \left(RSSI^{STAb,AP2} \cdot Gain_{C-SR}^{STAb}\right)/SNR_{min}^{MCS_{AP2}}$$

$$(1\ 3)$$ ... (Equation 13)

Regarding the coefficient of change in transmission power of each of STAb and AP1 of which the SNR of each of STAa and AP2 before C-SR control becomes a desired SNR (for example, equation 12) after C-SR control, the relationship of equation 14 holds.

[14]

$$Gain_{C-SR}^{STAb} = ARIL_{DL}^{STAa}/\left(RSSI^{STAb,STAa} \cdot Gain_{C-SR}^{AP1}\right)$$
$$Gain_{C-SR}^{AP1} = ARIL_{UL}^{AP2}/\left(RSSI^{AP1,AP2} \cdot Gain_{C-SR}^{STAb}\right)$$

$$(1\ 4)$$ ... (Equation 14)

Then, a transmission power of each of STAb and AP1 after C-SR control is calculated as expressed by equation 15 by using a corresponding one of $Tx^{STAb}_{pwr}$ indicating a transmission power of STAb before C-SR control and a transmission power $Tx^{AP1}_{pwr}$ of AP1 before C-SR control.

[15]

$$(\text{Transmission Power of STAb after C-SR Control}) = Tx_{pwr}^{STAb} \cdot Gain_{C-SR}^{STAb}$$

$$(\text{Transmission Power of AP1 after C-SR Control}) = Tx_{pwr}^{AP1} \cdot Gain_{C-SR}^{AP1}$$ ... (Equation 15)

As expressed by above-described equation 14 and the like, ARIL$^{STAa}$$_{DL}$, Gain$^{AP1}$$_{C-SR}$, and RSSI$^{STAb,STAa}$ are used to calculate the coefficient of change Gain$^{STAb}$$_{C-SR}$ in transmission power. ARIL$^{AP2}$$_{UL}$, Gain$^{STAb}$$_{C-SR}$, and RSSI$^{AP1,AP2}$ are used to calculate the coefficient of change Gain$^{AP1}$$_{C-SR}$ in transmission power. Gain$^{STAb}$$_{C-SR}$ is calculated by STAb, and Gain$^{AP1}$$_{C-SR}$ is calculated by AP1. Therefore, at least one or some of ARIL$^{STAa}$$_{DL}$, Gain$^{AP1}$$_{C-SR}$, RSSI$^{STAb,STAa}$, ARIL$^{AP2}$$_{UL}$, Gain$^{STAb}$$_{C-SR}$, and RSSI$^{AP1,AP2}$ are exchanged between AP1 and STAb.

RSSI$^{STAb,STAa}$ is an example of "inter-STA RSSI" (see FIG. 5), and RSSI$^{AP1,AP2}$ is an example of "inter-AP RSSI".

In the example of the control procedure shown in FIG. 14, a measurement phase, a setup phase, and a section in which data transmission is performed in coordination communication (data transmission) are sequentially shown. A measurement phase is a time section in which measurement of RSSI or the like between an STA and an AP and a notification of a measurement result are performed, and a setup phase is a time section in which lacking information for performing coordination communication is exchanged between nodes.

In a measurement phase, the specifications of measurement that an STA and/or an AP performs upon receiving an NDP transmitted from an AP and/or an STA in MAP NDPA are designated. In the example shown in FIG. 14, AP1 transmits an NDP (MAP NDP1 of FIG. 14), and each of AP2 and STA a receives the MAP NDP1 and measures the RSSI of the signal received from AP1 (hereinafter, written as "RSSI from AP 1"). STAb transmits an NDP (MAP NDPb of FIG. 14), and each of STAa and AP2 receives the MAP NDPb and measures the RSSI of the signal received from STAb (hereinafter, written as "RSSI from STAb").

FIG. 14 shows an example of RSSI measurement using an NDP in a measurement phase. Alternatively, each AP may transmit a Basic Trigger frame, an STA and/or an AP may measure RSSI upon receiving the Basic Trigger frame and respond to the AP with RSSI. Alternatively, an STA may transmit a TB PPDU (triggered-based PPDU) for a Trigger frame from an AP, and an STA and/or an AP may measure RSSI by using the TB PPDU.

In the example of FIG. 14, when the coefficient of change in transmission power is calculated, information used to calculate the coefficient of change in transmission power is lacking in STAb and AP1. For example, in STAb, ARIL$^{STAa}_{DL}$, Gain$^{AP1}_{C-SR}$, and RSSI$^{STAb,STAa}$ are lacking. In AP1, ARIL$^{AP2}_{UL}$, Gain$^{STAb}_{C-SR}$, and RSSI$^{AP1,AP2}$ are lacking.

For this reason, lacking information is exchanged in a setup phase. In the example of FIG. 14, AP1 provides a notification of information lacking in STAb in an MAP setup request frame (MAP SetupReq) via AP2. Then, AP2 provides a notification of information lacking in AP1 to AP1 in an MAP setup response frame (MAP SetupRes) as a response to the MAP SetupReq. Through the notification in the setup phase, STAb and AP1 can calculate the coefficient of change in transmission power. Then, in a section in which data transmission is performed, STAb is capable of performing UL data transmission by using transmission power subjected to C-SR control, and AP1 is capable of performing DL data transmission by using transmission power subjected to C-SR control.

As described above, information used in C-SR control (for example, information used in transmission power control) is defined according to a C-SR control type and exchanged between nodes, with the result that the efficiency of providing a notification of control information in coordination communication can be improved.

The control types according to the present embodiment are not limited to the three C-SR control types illustrated here. For example, the following methods may be included.

· A control method of determining an SR pattern that maximizes system throughput in consideration of all the transmission power patterns (SR patterns) and/or MCS levels (see NPL 8, Optimal Method)
· A control method of determining a patter that maximizes system throughput based on a simple SR table (composed of 0 or 1) and a representative MCS level (NPL 8, Sub-optimal Method)
· A control method for bi-directional coordination or one-way coordination (NPL 7, Option 1, Option 2)

The coefficient of change in transmission power (Tx Power Gain) may be replaced with transmission power (Tx Power) or pathloss. For example, instead of exchange of the coefficient of change in transmission power (Tx Power Gain) between nodes, a transmission power (Tx Power) or a pathloss may be exchanged between nodes. Calculation of the coefficient of change in transmission power is not limited to the example in which the calculation is performed by a transmission node that transmits a signal by using the coefficient of change and may be performed by a node different from the transmission node. For example, the coefficient of change in transmission power used by an STA may be calculated by an AP that connects with the STA.

A method (and/or a mode) of providing a notification of control information on C-SR control between the above-described nodes is not limited. Hereinafter, an example of a method (and/or a mode) of providing a notification of control information on C-SR control will be described.

In Embodiment 1, an information element that supports a control type (C-SR Control Information Element) includes information dependent on a C-SR Control Type (C-SR Control Type Dependent Info). Then, a mode in which the content of C-SR Control Type Dependent Info is changed according to a C-SR control type (C-SR Control Type) is adopted.

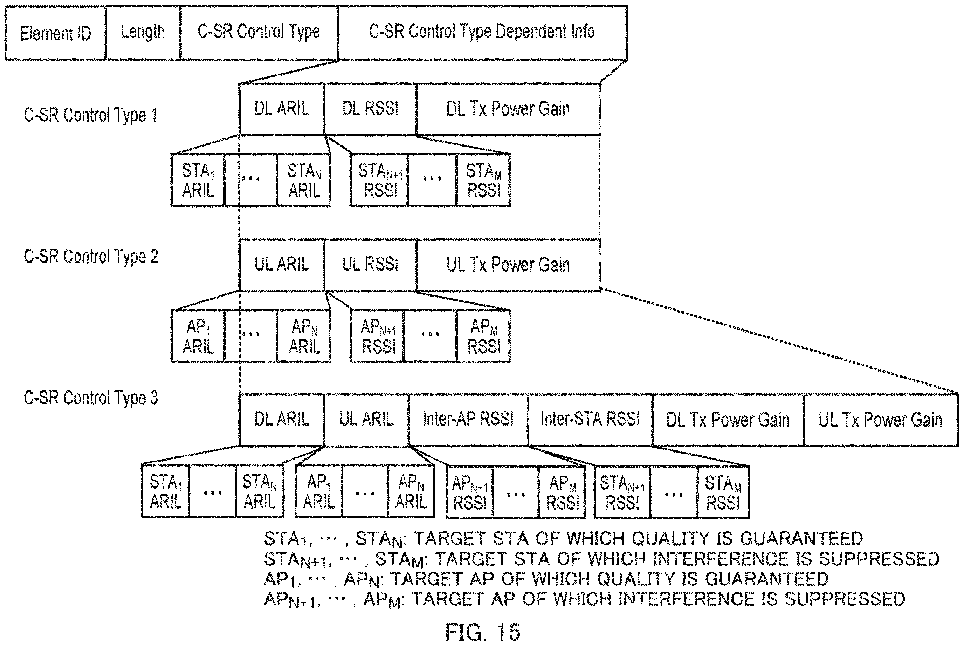

FIG. 15 is a diagram showing an example of an information element that supports a control type (C-SR Control Information Element) according to Embodiment 1. FIG. 15 shows fields included in an information element that supports a control type. The Element ID field and Length field of an information element shown in FIG. 15 respectively contain identification information indicating the information element and information of the length.

Hereinafter, regarding fields and subfields in the format of an information element and the format of a frame, the term "field" and the term "subfield" may be omitted. For example, the Element ID field may be written as Element ID. Information contained in a field (or a subfield) may be written by using the name of the field. For example, information contained in the Element ID field may be referred to as "Element ID".

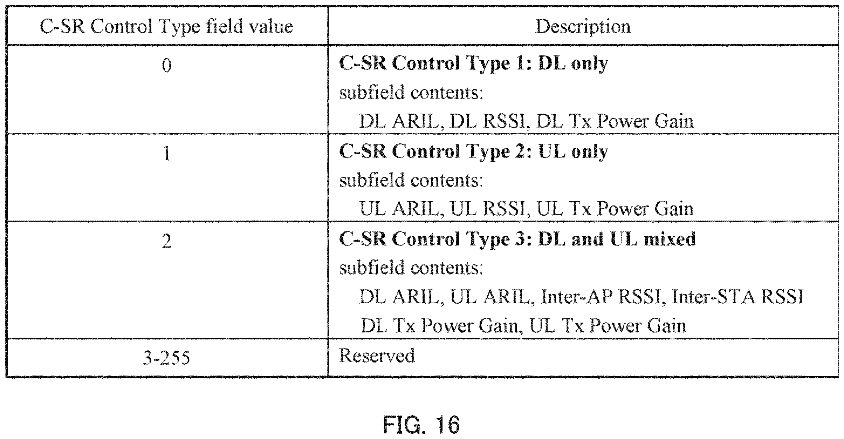

A C-SR Control Type field defines a C-SR Control Type. FIG. 16 is a table showing an example of a correspondence relationship between a C-SR Control Type field value and a C-SR control type (C-SR Control Type). For example, the C-SR Control Type field contains a C-SR Control Type field value based on the correspondence relationship shown in FIG. 16. For example, a node that has received a signal including an information element shown in FIG. 15 may determine a control type based on the C-SR Control Type field.

A C-SR Control Type Dependent Info field contains information dependent on a C-SR control type (C-SR Control Type). The content (for example, format) of the C-SR Control Type Dependent Info field is changed according to a C-SR control type. For example, as shown in FIG. 16, the contents of subfields necessary according to each C-SR Control Type may be defined.

For example, as shown in FIG. 15, when the C-SR control type is C-SR control type 1 (C-SR Control Type 1), the C-SR Control Type Dependent Info field contains three subfields called DL ARIL, DL RSSI, and DL Tx Power Gain.

The DL ARIL subfield contains subfields each containing information on the ARIL of a corresponding one of STAs. The DL ARIL subfield may contain subfields each containing information on the ARIL of a corresponding one of STAs of which the quality is guaranteed. An STA of which the quality is guaranteed may be, for example, an STA of which a desired SNR is satisfied in C-SR control. Alternatively, an STA of which the quality is guaranteed in an AP is an STA that is connected by radio to the AP.

The DL RSSI subfield contains subfields each containing information on the RSSI of a corresponding one of STAs. The DL RSSI subfield may contain subfields each containing information on the RSSI of a corresponding one of STAs of which interference is suppressed. An STA of which interference is suppressed may be, for example, an STA that has an interference effect on another node in C-SR control.

The DL Tx Power Gain subfield contains information on the coefficient of change in transmission power used by an AP in DL communication. The DL Tx Power Gain may contain information on the coefficient of change in transmission power regarding a plurality of nodes (for example, APs) that execute transmission power control.

For example, as shown in FIG. 15, when the C-SR control type is C-SR control type 2 (C-SR Control Type 2), the C-SR Control Type Dependent Info field contains three subfields called UL ARIL, UL RSSI, and UL Tx Power Gain.

The UL ARIL subfield contains subfields each containing information on the ARIL of a corresponding one of APs. The UL ARIL subfield may contain subfields each containing information on the ARIL of a corresponding one of APs of which the quality is guaranteed.

The UL RSSI subfield contains subfields each containing information on the RSSI of a corresponding one of APs. The UL RSSI subfield may contain subfields each containing information on the RSSI of a corresponding one of APs of which interference is suppressed.

The UL Tx Power Gain subfield contains information on the coefficient of change in transmission power used by an STA in UL communication. The UL Tx Power Gain may contain information on the coefficient of change in transmission power regarding a plurality of nodes (for example, STAs) that execute transmission power control.

For example, as shown in FIG. 15, when the C-SR control type is C-SR control type 3 (C-SR Control Type 3), the C-SR Control Type Dependent Info field contains three subfields called DL ARIL, UL ARIL, Inter-AP RSSI, Inter-STA RSSI, DL Tx Power Gain, and UL Tx Power Gain.

The DL ARIL subfield contains subfields each containing information on the ARIL of a corresponding one of STAs. The DL ARIL subfield may contain subfields each containing information on the ARIL of a corresponding one of STAs of which the quality is guaranteed.

The UL ARIL subfield contains subfields each containing information on the ARIL of a corresponding one of APs. The UL ARIL subfield may contain subfields each containing information on the ARIL of a corresponding one of APs of which the quality is guaranteed.

The Inter-AP RSSI subfield contains subfields each containing information on the RSSI of a signal transmitted and received between APs (hereinafter, which may be written as inter-AP RSSI). The Inter-AP RSSI subfield may contain subfields each containing information on the RSSI of a corresponding one of APs of which interference is suppressed.

The Inter-STARSSI subfield contains subfields each containing information on the RSSI of a signal transmitted and received between STAs (hereinafter, which may be written as inter-STA RSSI). The Inter-STARSSI subfield may contain subfields each containing information on the RSSI of a corresponding one of STAs of which interference is suppressed.

The DL Tx Power Gain subfield contains information on the coefficient of change in transmission power used by an AP in DL communication.

The UL Tx Power Gain subfield contains information on the coefficient of change in transmission power used by an STAin UL communication.

A signal including the above-described information element that supports a control type (C-SR Control Information Element) is exchanged between nodes. Each of the nodes executes C-SR control including transmission power control according to the C-SR Control Type of the exchanged information element.

As described above, in Embodiment 1, a notification of a C-SR Control Type is provided, and the content of information dependent on the C-SR Control Type (C-SR Control Type Dependent Info) is changed according to the C-SR Control Type. Thus, it is possible to increase the information content of information to be signaled and efficiently signal information desired by C-SR control.

(Embodiment 2)

The configuration of APs and STAs according to Embodiment 2 may be similar to that of Embodiment 1.

In Embodiment 2, as well as Embodiment 1, the content of C-SR Control Type Dependent Info is changed according to a C-SR control type of which a notification is provided in the C-SR Control Type field. Embodiment 2 differs from Embodiment 1 in the content (or mode) of change.

In Embodiment 2, information on C-SR control is separated into C-SR control type dependent information common to nodes (APs and/or STAs) (C-SR Control Type Dependent Common Info) and C-SR control type dependent information (C-SR Control Type Dependent Info) for each of the nodes (APs and/or STAs), and a notification of those pieces of information is provided.

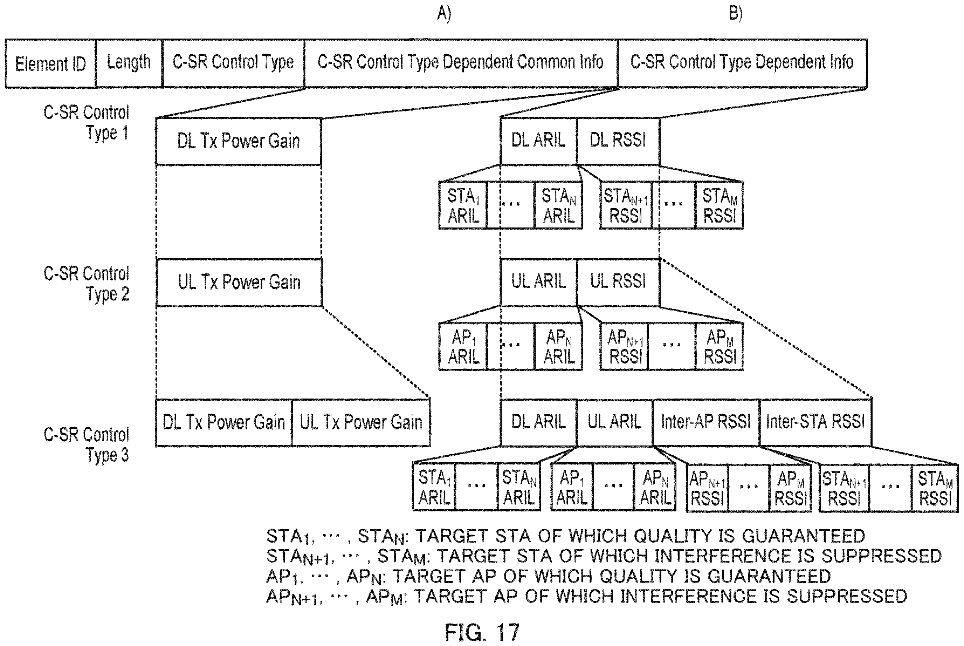

FIG. 17 is a diagram showing an example of an information element that supports a control type (C-SR Control Information Element) according to Embodiment 2. FIG. 17, as well as FIG. 15, shows fields included in an information element that supports a control type. In FIG. 17, the description of fields common to those of FIG. 15 may be omitted.

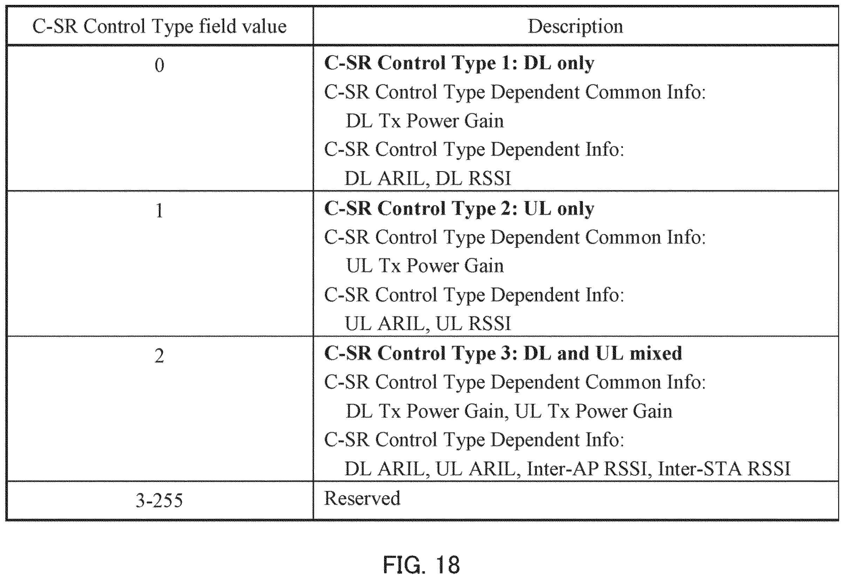

A C-SR Control Type field defines a C-SR Control Type. FIG. 18 is a diagram showing an example of a correspondence relationship between a C-SR Control Type field value and a C-SR control type (C-SR Control Type). For example, the C-SR Control Type field contains a C-SR Control Type field value based on the correspondence relationship shown in FIG. 18.

The C-SR Control Type Dependent Common Info field contains information common to nodes (APs and/or STAs) and dependent on a C-SR control type. The format of the C-SR Control Type Dependent Common Info field is changed according to a C-SR control type. For example, as shown in FIG. 18, the contents of subfields necessary according to each C-SR Control Type may be defined.

For example, as shown in FIG. 17, when the C-SR control type is C-SR control type 1 (C-SR Control Type 1), the C-SR Control Type Dependent Common Info field contains a subfield called DL Tx Power Gain. Information contained in the DL Tx Power Gain subfield may be similar to the DL Tx Power Gain subfield of C-SR control type 1 in FIG. 15.

For example, as shown in FIG. 17, when the C-SR control type is C-SR control type 2 (C-SR Control Type 2), the C-SR Control Type Dependent Common Info field contains a subfield called UL Tx Power Gain. Information contained in the UL Tx Power Gain subfield may be similar to the UL Tx Power Gain subfield of C-SR control type 2 in FIG. 15.

For example, as shown in FIG. 17, when the C-SR control type is C-SR control type 3 (C-SR Control Type 3), the C-SR Control Type Dependent Common Info field contains subfields called DL Tx Power Gain and DL Tx Power Gain. The DL Tx Power Gain subfield and the UL Tx Power Gain subfield may be respectively similar to the DL Tx Power Gain subfield and the UL Tx Power Gain subfield of C-SR control type 3 in FIG. 15.

The C-SR Control Type Dependent Info field contains information for each node (AP and/or STA) and dependent on a C-SR control type (C-SR Control Type). The format of the C-SR Control Type Dependent Info field is changed according to a C-SR control type. For example, as shown in FIG. 18, the contents of subfields necessary according to each C-SR Control Type may be defined.

For example, as shown in FIG. 17, when the C-SR control type is C-SR control type 1 (C-SR Control Type 1), the C-SR Control Type Dependent Info field contains subfields called DL ARIL and DL RSSI. Information contained in the DL ARIL subfield and the DL RSSI subfield may be respectively similar to the DL ARIL subfield and the DL RSSI subfield of C-SR control type 1 in FIG. 15.

For example, as shown in FIG. 17, when the C-SR control type is C-SR control type 2 (C-SR Control Type 2), the C-SR Control Type Dependent Info field contains subfields called UL ARIL and UL RSSI. Information contained in the UL ARIL subfield and the UL RSSI subfield may be respectively similar to the UL ARIL subfield and the UL RSSI subfield of C-SR control type 2 in FIG. 15.

For example, as shown in FIG. 17, when the C-SR control type is C-SR control type 3 (C-SR Control Type 3), the C-SR Control Type Dependent Info field contains subfields called DL ARIL, UL ARIL, Inter-AP RSSI, and Inter-STA RSSI. Information contained in the DL ARIL subfield, the UL ARIL subfield, the Inter-AP RSSI subfield, and the Inter-STA RSSI subfield may be respectively similar to the DL ARIL subfield, the UL ARIL subfield, the Inter-AP RSSI subfield, and the Inter-STARSSI subfield of C-SR control type 3 in FIG. 15.

As described above, in Embodiment 2, a notification of a C-SR Control Type is provided, and the contents of C-SR Control Type Dependent Common Info field and/or C-SR Control Type Dependent Info field, dependent on the C-SR Control Type, is changed according to the C-SR Control Type. Thus, it is possible to increase the information content of information to be signaled and efficiently signal information desired by C-SR control. Since a notification of information common to nodes (APs and/or STAs) and information for each node (AP and/or STA) can be separately provided, it is possible to suppress an increase in the information content of information to be signaled.

FIG. 17 shows an example including a C-SR Control Type field; however, the C-SR Control Type field does not need to be included. For example, a node that has received a signal including an information element not containing a C-SR Control Type field may determine a C-SR Control Type based on the size of the C-SR Control Type Dependent Common Info field and/or the C-SR Control Type Dependent Info field.

(Embodiment 3)

The configuration of APs and STAs according to Embodiment 3 may be similar to that of Embodiment 1.

In Embodiment 3, a C-SR Control Type is defined by a Subtype of a Frame Control field of an MAP Trigger frame or a Control Frame Extension subtype. Then, the contents of MAP scheme dependent common information (MAP scheme Dependent Common Info) and MAP scheme dependent information (MAP scheme Dependent Info) are changed according to a C-SR Control Type.

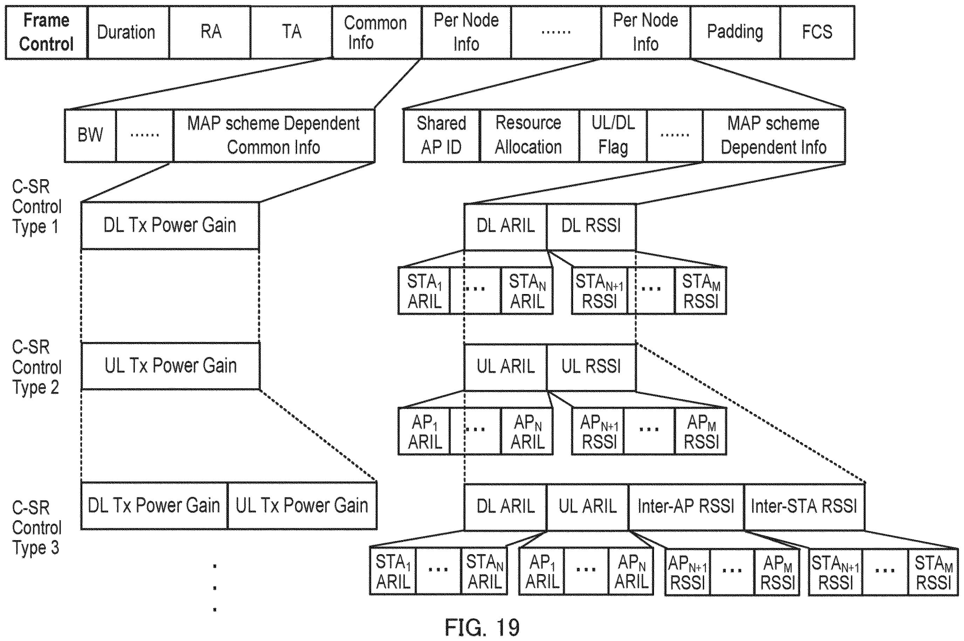

FIG. 19 is a diagram showing an example of the format of an MAP Trigger frame according to Embodiment 3. In Embodiment 3, a C-SR Control Type is defined by a Subtype of a Frame Control field of an MAP Trigger frame of FIG. 19 or a Control Frame Extension subtype.

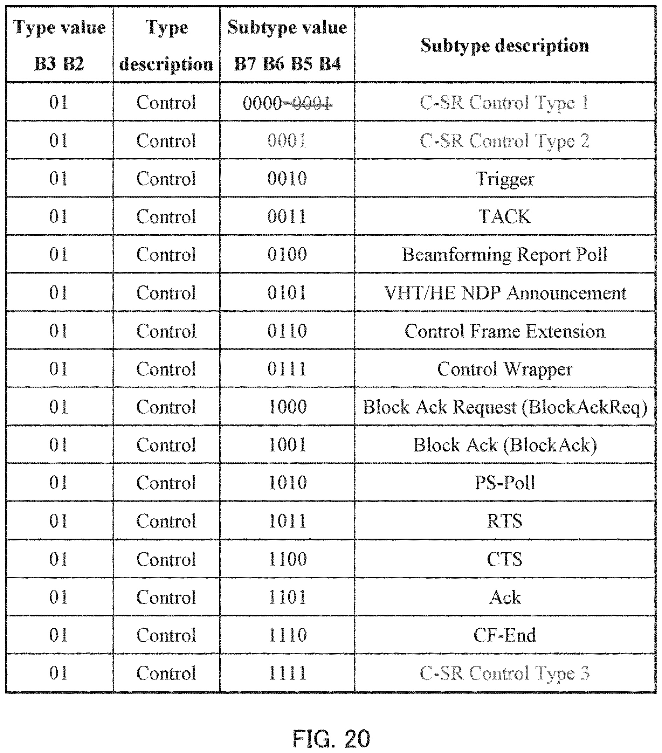

FIG. 20 is a table showing an example of the definition of a Type and Subtype subfield in the Frame Control field. FIG. 20 is a table excerpting a Control type in IEEE 802.11ax specifications, for example. In the example shown in FIG. 20, three Subtype values, that is, "0000", "0001", and "1111" that are Reserved values, are respectively associated with C-SR Control Type 1, C-SR Control Type 2, and C-SR Control Type 3. In other words, three Subtype values, that is, "0000", "0001", and "1111", respectively define C-SR Control Type 1, C-SR Control Type 2, and C-SR Control Type 3.

The configuration is not limited to the example of FIG. 20. For example, Reserved values other than Subtype values, that is, "0000", "0001", and "1111", may be associated with C-SR Control Types.

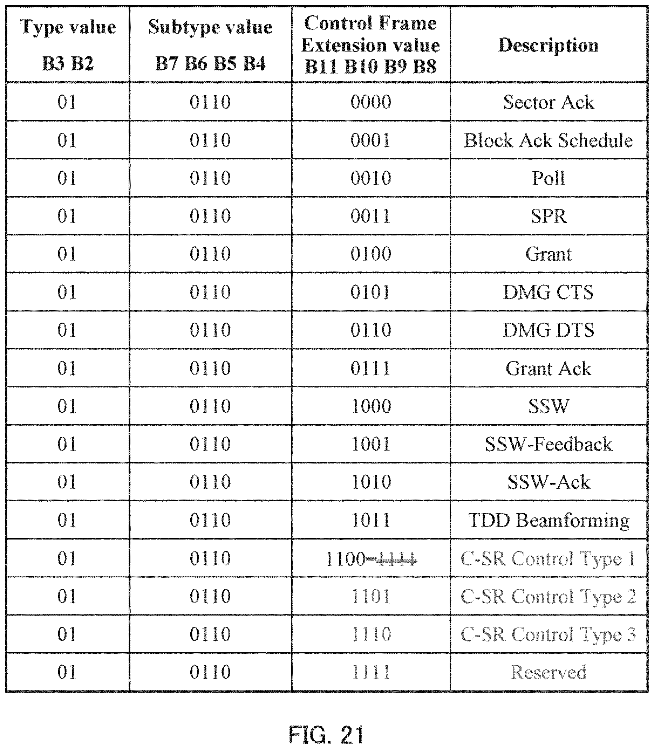

FIG. 21 is a table showing an example of the definition of a Control Frame Extension subfield in the Frame Control field. In the example shown in FIG. 21, Control Frame Extension values, that is, "1100", "1101", and "1110", that are Reserved values, are respectively associated with C-SR Control Type 1, C-SR Control Type 2, and C-SR Control Type 3. In other words, Control Frame Extension values, that is, "1100", "1101", and "1110", respectively define C-SR Control Type 1, C-SR Control Type 2, and C-SR Control Type 3.

The configuration is not limited to the example of FIG. 21. For example, Reserved values other than the Reserved values, that is, " 1100", "1101", and " 1110", in the Control Frame Extension value may be associated with C-SR Control Types.

Information contained in the MAP scheme Dependent Common Info subfield in FIG. 19 (for example, a subfield) may be similar to that of the C-SR Control Type Dependent Common Info field in Embodiment 2. Information contained in the MAP scheme Dependent Info subfield (for example, a subfield) may be similar to that of the C-SR Control Type Dependent Info field in Embodiment 2.

Information common to all the nodes and, for example, information of a bandwidth (BW (BandWidth)) is contained as common notification information regardless of a C-SR Control Type is contained in the Common Info field shown in FIG. 19.

Notification information for each node is contained in a Per Node Info field. Notification information common to the node and common regardless of C-SR Control Type is contained in the Per Node Info field. In the example of FIG. 19, for example, a Shared AP ID subfield, a Resource Allocation subfield, and a UL/DL Flag subfield are contained in the Per Node Info field. Information on the ID of a Shared AP is contained in the Shared AP ID subfield. Information on resource allocation is contained in the Resource Allocation subfield. Flag information indicating UL communication or DL communication is contained in the UL/DL Flag subfield.

BW and Resource Allocation in FIG. 19 may be similar to the definition of a UL BW subfield (in the Common Info field) and an RU Allocation subfield (in the User Info field), defined in the Trigger frame format of 802.11ax.

The size and location of RU may be determined by an RU Allocation subfield defined in a Common field of HE-SIG-B of IEEE 802.11ax, a Spatial Configuration subfield of a User Specific field, and/or a method similar to a method extended for IEEE 802.11be.

In the RU Allocation subfield of IEEE 802.11ax, RU with a size lower than 20 MHz is also defined; however, the definition is not limited thereto in Resource allocation. RU may, for example, have a size higher than or equal to 20 MHz.

As described above, in Embodiment 3, a notification of a C-SR Control Type is provided in the Frame Control field, a notification of information common to nodes (APs and/or STAs) is provided in the MAP scheme Dependent Common Info subfield according to the C-SR Control Type, and a notification of information for each node (AP and/or STA) is provided in the MAP scheme Dependent Info according to the C-SR Control Type. Through the notification, it is possible to increase the information content of information to be signaled and efficiently signal information desired by C-SR control.

(Embodiment 4)

The configuration of APs and STAs according to Embodiment 4 may be similar to that of Embodiment 1.

In Embodiment 4, a notification of a C-SR Control Type is provided in a Trigger Type subfield of an MAP Trigger frame. The Trigger Type field may be similar to a UL Trigger in the specifications of 802.11ax.

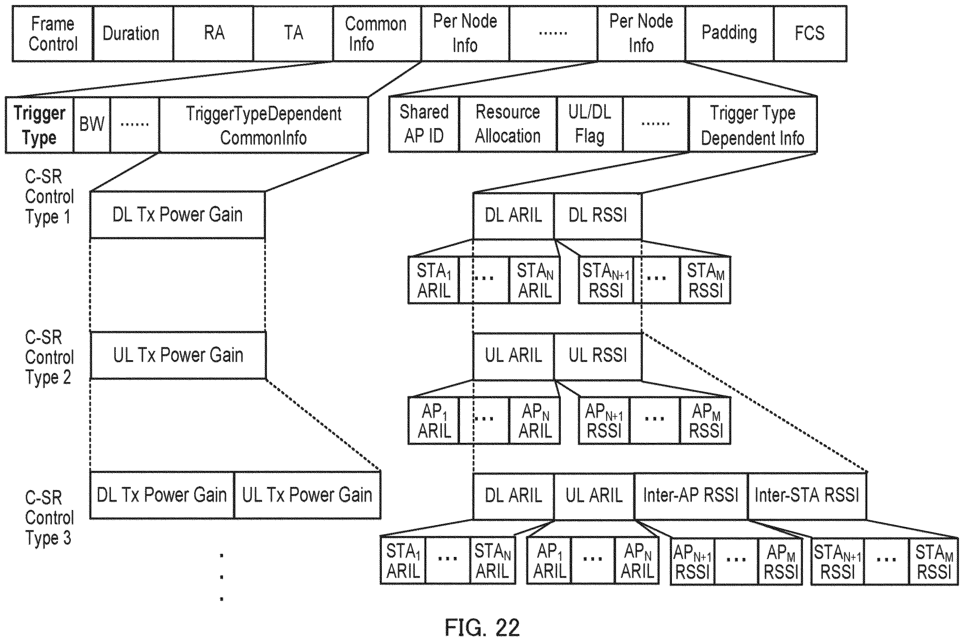

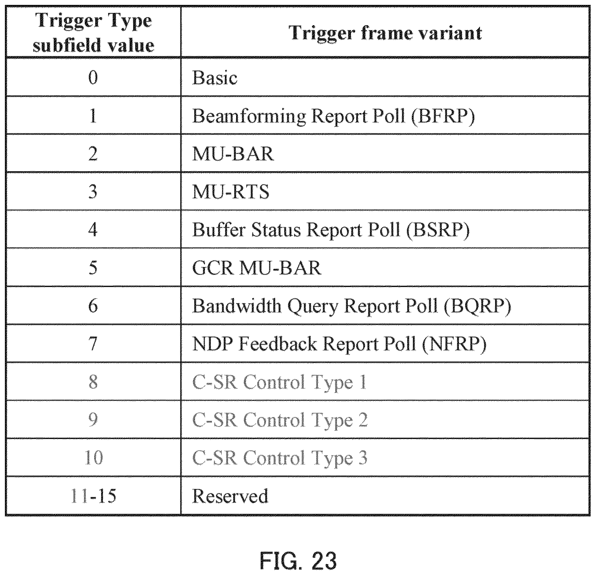

FIG. 22 is a diagram showing an example of the format of the MAP Trigger frame according to Embodiment 4. FIG. 23 is a table showing an example of the definition of the Trigger Type subfield.

As shown in FIG. 23, three C-SR Control Types may be defined in correspondence with values 8 to 10 in the Trigger Type subfield (Table 9-46) in the specifications of IEEE 802.1 1ax. With the definition of C-SR Control Type, a node that receives information may identify (or recognize or determine) a C-SR Control Type in the Trigger Type subfield of the Common Info field shown in FIG. 22. The contents (for example formats) of Trigger type dependent common information (Trigger Type Dependent Common Info) and Trigger type dependent information (Trigger Type Dependent Info) are changed based on a C-SR Control Type.

The BW and Trigger Type Dependent Common Info in Common Info may be respectively similar to the BW and MAP scheme Dependent Common Info in Embodiment 3. Shared AP ID, Resource Allocation, UL/DL Flag, and Trigger Type Dependent Info in the Per Node Info may be respectively similar to Shared AP ID, Resource Allocation, UL/DL Flag, and MAP scheme Dependent Info in Embodiment 3.

As described above, in Embodiment 4, a notification of a C-SR Control Type is provided in the Trigger Type, a notification of information common to nodes (APs and/or STAs) is provided in the Trigger Type Dependent Common Info according to the C-SR Control Type, and a notification of information for each node (AP and/or STA) is provided in the Trigger Type Dependent Info according to the C-SR Control Type. Through the notification, it is possible to increase the information content of information to be signaled and efficiently signal information desired by C-SR control.

(Embodiment 5)

The configuration of APs and STAs according to Embodiment 5 may be similar to that of Embodiment 1.

In Embodiment 5, a notification of C-SR of MAP is provided in a Trigger Type, and a notification of a C-SR Control Type is provided in Trigger type dependent common information (Trigger Type Dependent Common Info).

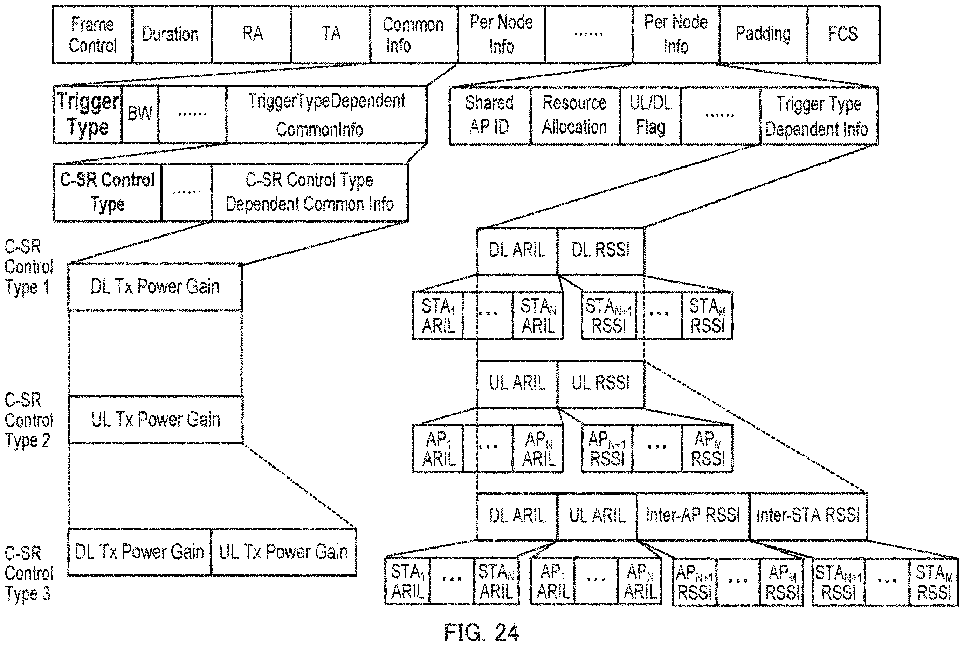

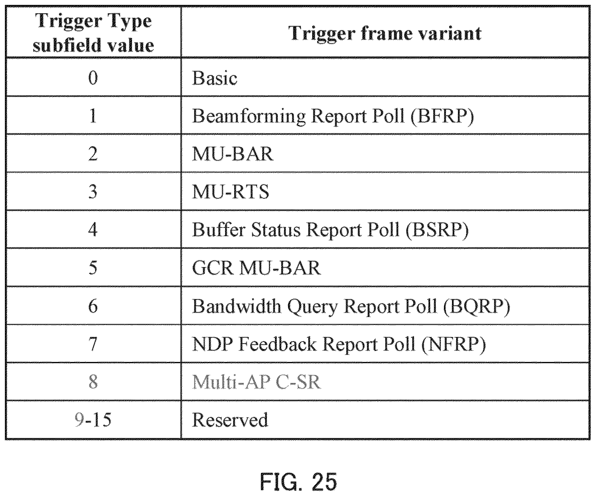

FIG. 24 is a diagram showing an example of the format of an MAP Trigger frame according to Embodiment 5. FIG. 25 is a table showing an example of the definition of a Trigger Type subfield.

As shown in FIG. 25, C-SR of MAP may be defined in correspondence with value 8 in the Trigger Type subfield (Table 9-46) in the specifications of IEEE 802.11ax. With the definition of C-SR of MAP, a node that has received information may be identified as C-SR of MAP in the Trigger Type in Common Info shown in FIG. 24. Then, a node that has received information identifies a C-SR Control Type in the C-SR Control Type subfield of Trigger type dependent common information (Trigger Type Dependent Common Info). For example, pieces of information (for example, values) to be respectively associated with C-SR Control Type 1 to C-SR Control Type 3 are defined. Then, the C-SR Control Type subfield contains information associated with any one of C-SR Control Type 1 to C-SR Control Type 3. With the C-SR Control Type subfield, the contents (formats) of C-SR control type dependent common information (C-SR Control Type Dependent Common Info) in the Trigger Type Dependent Common Info and C-SR control type dependent information (C-SR Control Type Dependent Info) in the Per Node Info are changed.

The BW and the C-SR Control Type Dependent Common Info in the Common Info may be respectively similar to the BW and the MAP scheme Dependent Common Info in Embodiment 3. Shared AP ID, Resource Allocation, UL/DL Flag, and Trigger Type Dependent Info in the Per Node Info may be respectively similar to Shared AP ID, Resource Allocation, UL/DL Flag, and MAP scheme Dependent Info in Embodiment 3.

As described above, in Embodiment 5, a notification of C-SR of MAP is provided in the Trigger Type, and additionally a notification of a C-SR Control Type is provided in the C-SR Control Type subfield of the Trigger Type Dependent Common Info. Then, a notification of information common to nodes (APs and/or STAs) is provided in the C-SR Control Type Dependent Common Info according to the C-SR Control Type, and a notification of information for each node (AP and/or STA) is provided in the Trigger Type Dependent Info according to the C-SR Control Type. Through the notification, it is possible to increase the information content of information to be signaled and efficiently signal information desired by C-SR control.

(Embodiment 6)

The configuration of APs and STAs according to Embodiment 6 may be similar to that of Embodiment 1.

In Embodiment 6, a notification of an MAP coordination scheme of each Shared AP and a C-SR Control Type is provided in an MAP scheme field disposed in a common information (Common Info) field of the MAP Trigger frame. Then, according to the provided notification of the MAP coordination schemes and the C-SR Control Type, the contents (for example, formats) of MAP coordination scheme dependent common information (MAP scheme Dependent Common Info) and MAP coordination scheme dependent information (MAP scheme Dependent Info) are changed. The term "disposing" may be read as another term, such as "mapping" or "setting".

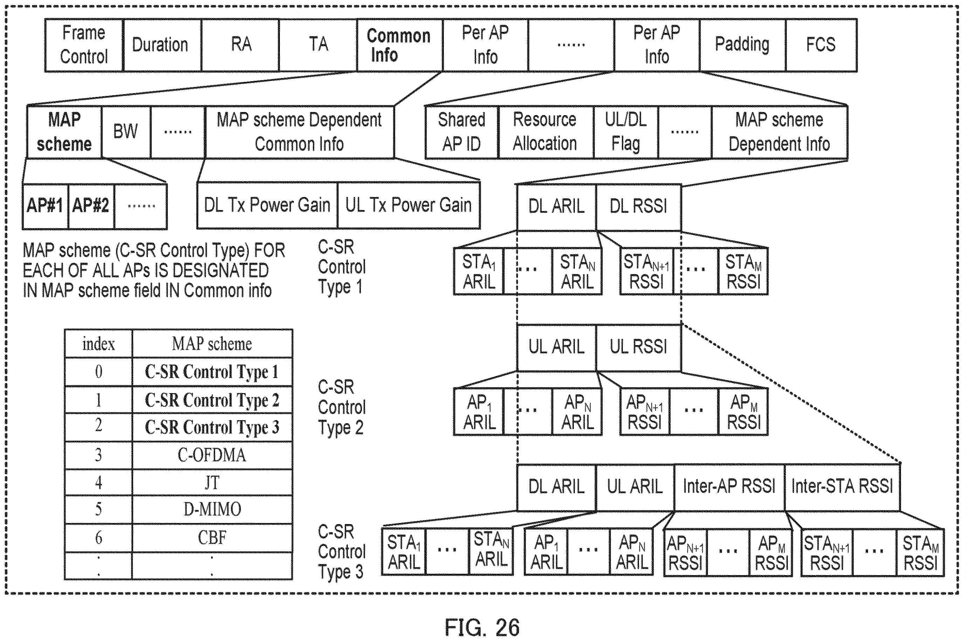

FIG. 26 is a diagram showing an example of the format of the MAP Trigger frame according to Embodiment 6. FIG. 26 shows an example of the definition of an MAP Scheme subfield together.

As shown in FIG. 26, an MAP coordination scheme and a C-SR Control Type for each of Shared APs are designated in the MAP scheme field in Common Info. A notification that the frame shown in FIG. 26 is an MAP Trigger frame may be, for example, provided in a Trigger Type as in the case of Embodiment 5.

The BW and the MAP scheme Dependent Common Info in the Common Info may be respectively similar to the BW and the MAP scheme Dependent Common Info in Embodiment 3. Shared AP ID, Resource Allocation, UL/DL Flag, and MAP scheme Dependent Info in the Per Node Info may be respectively similar to Shared AP ID, Resource Allocation, UL/DL Flag, and MAP scheme Dependent Info in Embodiment 3.

As described above, in Embodiment 6, a notification of an MAP coordination scheme of each Shared AP and a C-SR Control Type are provided in the MAP scheme field disposed in the Common Info field. Then, according to the MAP coordination scheme and C-SR Control Type, the contents of MAP scheme Dependent Common Info and MAP scheme Dependent Info are changed. Through the notification, it is possible to increase the information content of information to be signaled and efficiently signal information desired by C-SR control.

(Embodiment 7)

The configuration of APs and STAs according to Embodiment 7 may be similar to that of Embodiment 1.

In Embodiment 7, a notification of an MAP coordination scheme and a C-SR Control Type is provided (designated) in a Per AP Info field of an MAP Trigger frame. Then, according to the provided notification of the MAP coordination scheme and the C-SR Control Type, the content (for example, format) of MAP coordination scheme dependent information (MAP scheme Dependent Info) is changed.

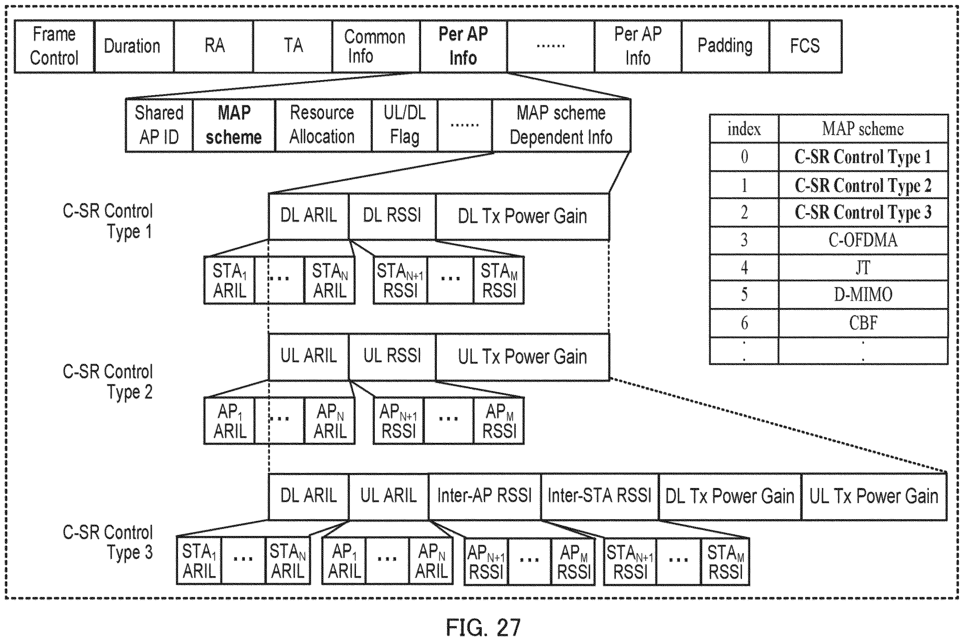

FIG. 27 is a diagram showing an example of the format of the MAP Trigger frame according to Embodiment 7. FIG. 27 shows an example of the definition of an MAP Scheme subfield together.

As shown in FIG. 27, the MAP scheme field is provided in the Per AP Info. With the MAP scheme field, an MAP coordination scheme for each Shared AP and a C-SR Control Type are designated. A notification that the frame shown in FIG. 27 is an MAP Trigger frame may be, for example, provided in the Trigger Type as in the case of Embodiment 5.

For example, information of BW is contained in Common Info shown in FIG. 27 as common notification information common to all the Shared APs regardless of an MAP coordination scheme or a C-SR Control Type BW shown in FIG. 27 may be similar to BW in Embodiment 3. For example, Shared AP ID (AP ID), MAP scheme, Resource Allocation, and UL/DL Flag are contained in the Per AP Info as notification information common to Shared APs. Shared AP ID (AP ID), Resource Allocation, and UL/DL Flag shown in FIG. 27 may be respectively similar to Shared AP ID, Resource Allocation, and UL/DL Flag in Embodiment 3. For example, an MAP scheme is contained in the Per AP Info as notification information common to Shared APs. The MAP scheme shown in FIG. 27 may be similar to the MAP scheme in Embodiment 6.

MAP coordination scheme dependent information (MAP scheme Dependent Info) is contained in the Per AP Info as notification information that varies depending on an MAP coordination scheme and a C-SR Control Type. The content of the MAP scheme Dependent Info in FIG. 27 may be similar to that of the C-SR Control Type Dependent Info in Embodiment 1. The field length of the MAP scheme Dependent Info may be a variable length by giving priority to a reduction in signaling amount or may be a fixed length by giving priority to ease of decoding.

As described above, in Embodiment 7, an MAP coordination scheme and a C-SR Control Type are contained in the Per AP info. The field length of the Per AP info can be made variable. Through the notification, it is possible to increase the information content of information to be signaled and efficiently signal information desired by C-SR control. When the field length of the Per AP info is fixed, the Per AP info can be decoded through simple processing (for example, decoding).

(Embodiment 8)

The configuration of APs and STAs according to Embodiment 8 may be similar to that of Embodiment 1.

In Embodiment 8, when an MAP coordination scheme and a C-SR Control Type are different STA by STA, a Per AP Info field for setting information of each AP is provided, and Per STA Info that is information of each STA is set in the Per AP Info field.

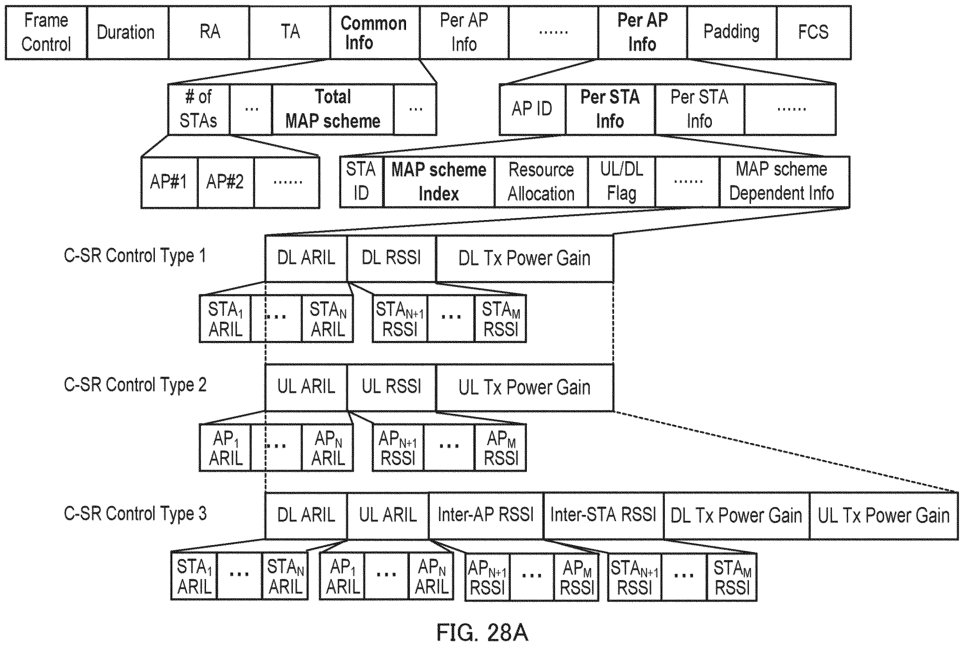

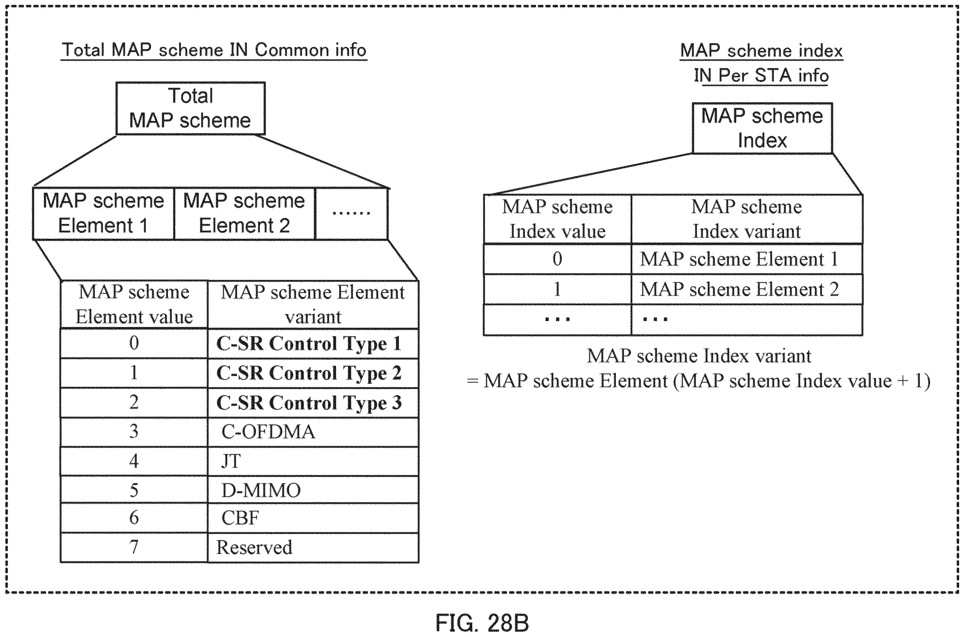

FIG. 28A is a diagram showing an example of the format of an MAP Trigger frame according to Embodiment 8. FIG. 28B is a diagram showing an example of the definition of a Total MAP scheme and an MAP scheme index in the format shown in FIG. 28A.

As shown in FIG. 28A, "# of STAx" containing information on the number of STAs of each Shared AP is provided in Common Info. Information on the number of STAs of each Shared AP (AP#1, AP#2) is set in "# of STAx". The number of STAs of each Shared AP may be, for example, the number of STAs connected to each Shared AP. A reception node determines the number of pieces of Per STA info contained in each piece of Per AP Info in accordance with information on "# of STAx". The number of pieces of Per AP Info may be, for example, the number of Shared APs. Then, pieces of Per AP Infor respectively corresponding with Shared APs may be contained.

In FIG. 28A, the number of STAs is designated for each Shared AP; however, the present disclosure is not limited thereto. For example, the maximum number of STAs among the number of STAs to which each Shared AP is connected may be designated as the number of STAs common to Shared APs. In this case, the number of pieces of Per STA info contained in each piece of Per AP Info may be the maximum number of STAs. Then, for a Shared AP of which the number of STAs connected is less than the maximum number of STAs, part of the Per STA info contained in the Per AP Info corresponding with the Shared AP may be filled by Padding. For example, pieces of Per STA info in number corresponding to a difference between the maximum number of STAs and the number of STAs connected may be filled by Padding.

FIG. 28A shows an example in which "# of STAx" containing information on the number of STAs is provided in the Common Info has been described. Alternatively, "# of STAx" containing information on the number of STAs may be disposed in the Per AP info.

For designation (notification) of an MAP coordination scheme and a C-SR Control Type, as shown in FIG. 28A, a total MAP coordination scheme and a C-SR Control Type are designated in a Total MAP scheme of the Common Info. For example, in each of a plurality of MAP scheme Elements in the Total MAP scheme, a notification of an MAP coordination scheme and/or a C-SR Control Type is provided. Information indicating an MAP coordination scheme and/or a C-SR Control Type is set in each of the MAP scheme Elements. The number of MAP scheme Elements in the Total MAP scheme may be one.

Then, an MAP scheme index in the Per STA info may be designated so as to identify an MAP coordination scheme and/or a C-SR Control Type from among the MAP scheme Elements in the Total MAP scheme. For example, a corresponding MAP coordination scheme may be identified by the following equation with an MAP scheme Index.

$$\text{MAP scheme Index variant} = \text{MAP scheme Element} (= \text{MAP scheme Index value} + 1)$$

For example, the ID of STA (STA ID), Resource Allocation, and UL/DL Flag are contained in the Per STA info in each piece of Per AP Info shown in FIG. 28A as notification information common regardless of an MAP coordination scheme or a C-SR Control Type. Resource Allocation and UL/DL Flag in FIG. 28A may be respectively similar to Resource Allocation and UL/DL Flag in Embodiment 3.

MAP coordination scheme dependent information (MAP scheme Dependent Info) is contained in the Per STA Info as notification information that varies depending on an MAP coordination scheme and/or a C-SR Control Type. The content of the MAP scheme Dependent Info in FIG. 28A may be similar to that of the C-SR Control Type Dependent Info in Embodiment 1.

For STA ID, a MAC address (48 bits) may be used as designation to an STA not associated with a Shared AP; however, the overhead is large, so the identifier of an STA, that is, a Short ID, may be defined. For example, a Short ID may be defined by being incorporated in AID in the specifications of IEEE 802.11ax or may be allocated to Reserved of AID 12.

The field length of the Per STA info field, as well as the Per AP info field of Embodiment 7, may be a fixed length or may be a variable length. For example, the field length of the Per STA info field may be a variable length by giving priority to a reduction in signaling amount or may be a fixed length by giving priority to ease of decoding.

Shared AP ID (AP ID) may be omitted when the order of Shared APs is similar to the order of which a notification is provided in advance and with which AP each piece of Per AP Info corresponds is recognizable.

In the example shown in FIG. 28A, an MAP scheme Index is disposed in the Per STAinfo and provided STA by STA. Alternatively, an MAP scheme Index may be disposed not in the Per STA info but in the Per AP Info as being common among STAs.

As shown in FIG. 28A, instead of using the Total MAP scheme in the Common Info, an MAP scheme may be disposed in the Per STA Info or the Per AP Info. An MAP scheme may be similar to, for example, an MAP scheme of Embodiment 6.

As described above, in Embodiment 8, an MAP coordination scheme and a C-SR Control Type are contained in the Per STA info or the Per AP Info. When the field length of the Per STA info is made variable, it is possible to reduce the information content to be signaled. When the field length of the Per STA info is fixed, the Per STA info can be decoded by simple processing (for example, decoding).

(Embodiment 9)

The configuration of APs and STAs according to Embodiment 9 may be similar to that of Embodiment 1.

In Embodiment 9, when an MAP coordination scheme and a C-SR Control Type are different STA by STA, an MAP coordination scheme and a C-SR Control Type are designated in the Per STA info field.

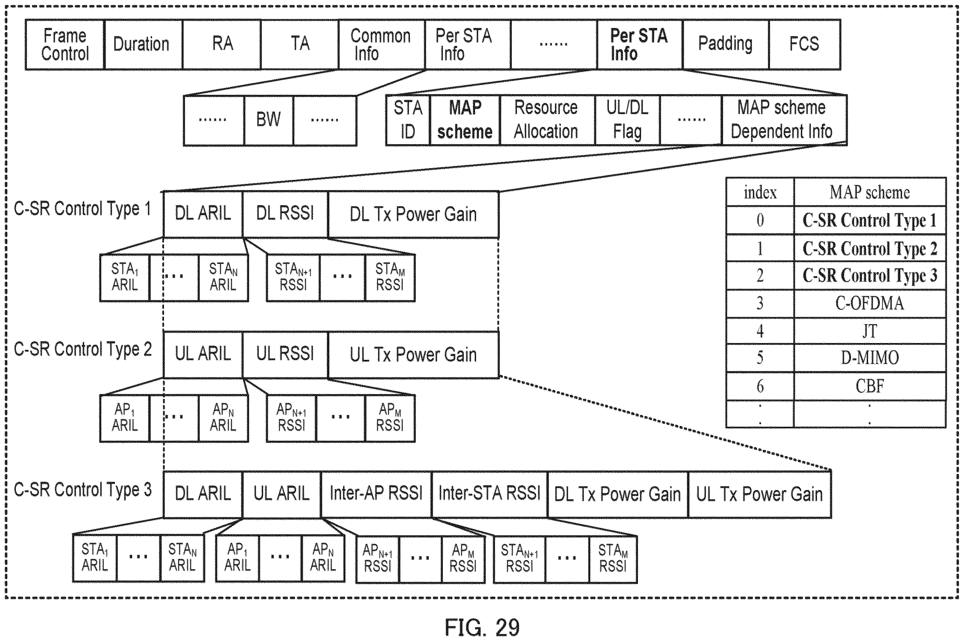

FIG. 29 is a diagram showing an example of the format of an MAP Trigger frame according to Embodiment 9. FIG. 29 shows an example of the definition of an MAP Scheme subfield together.

As shown in FIG. 29, Per STA info is disposed in the same layer as Common Info. The Per STA info contains, for example, ID of STA (STA ID), MAP scheme, Resource Allocation, and UL/DL Flag as common notification information regardless of an MAP coordination scheme or a C-SR Control Type. The ID of STA (STA ID), the Resource Allocation, and the UL/DL Flag of FIG. 29 may be similar to those of Embodiment 8 or the like, and the MAP scheme of FIG. 29 may be similar to that of Embodiment 6 or the like.

The MAP coordination scheme dependent information (MAP scheme Dependent Info) is contained in the Per STA Info as notification information that varies depending on an MAP coordination scheme and a C-SR Control Type. The content of the MAP scheme Dependent Info in FIG. 29 may be similar to that of the C-SR Control Type Dependent Info in Embodiment 1.

The field length of the Per STA info field, as well as the Per AP info field of Embodiment 7, may be a fixed length or may be a variable length. For example, the field length of the Per STA info field may be a variable length by giving priority to a reduction in signaling amount or may be a fixed length by giving priority to ease of decoding.

When an STA is designated, a Shared AP associated with (maintains a connection relationship with) the designated STA is identified, so a notification of Shared AP ID (AP ID) does not need to be provided. When, for example, an STA is designated in the STA ID, an STA ID unique to each of STAs under the command of each of all the Shared APs is allocated. When AID (Association ID) or AID12 is used to allocate unique STA IDs, the following method is conceivable.

Method 1: ID assignment is centrally managed such that AID space (designated range) is entirely shared and unique AIDs are assigned. For example, a Sharing AP manages ID assignment and assigns ID to an STA directly or via a Shared AP.

Method 2: Negotiation is performed such that an exclusive region of AID space is used by each Shared AP. For example, negotiation is performed such that AID space that one of two Shared APs uses is exclusive to AID space that the other one of the two Shared APs uses. For example, AID space that each Shared AP uses may be set in advance or may be designated by a Sharing AP.

In Embodiment 9, with this configuration, it is possible to avoid overlaps of STA information and reduce signaling amount. When an MAP coordination scheme and a C-SR Control Type are disposed in the Per STA info and the field length of the Per STA info is made variable, it is possible to reduce the information content to be signaled. When the field length of the Per STA info is fixed, the Per STA info can be decoded by simple processing (for example, decoding).

(Embodiment 10)

The configuration of APs and STAs according to Embodiment 10 may be similar to that of Embodiment 1.

Embodiment 10 takes a mode to switch the method among Embodiment 6 to Embodiment 9. A type of format may be designated in Common Info.

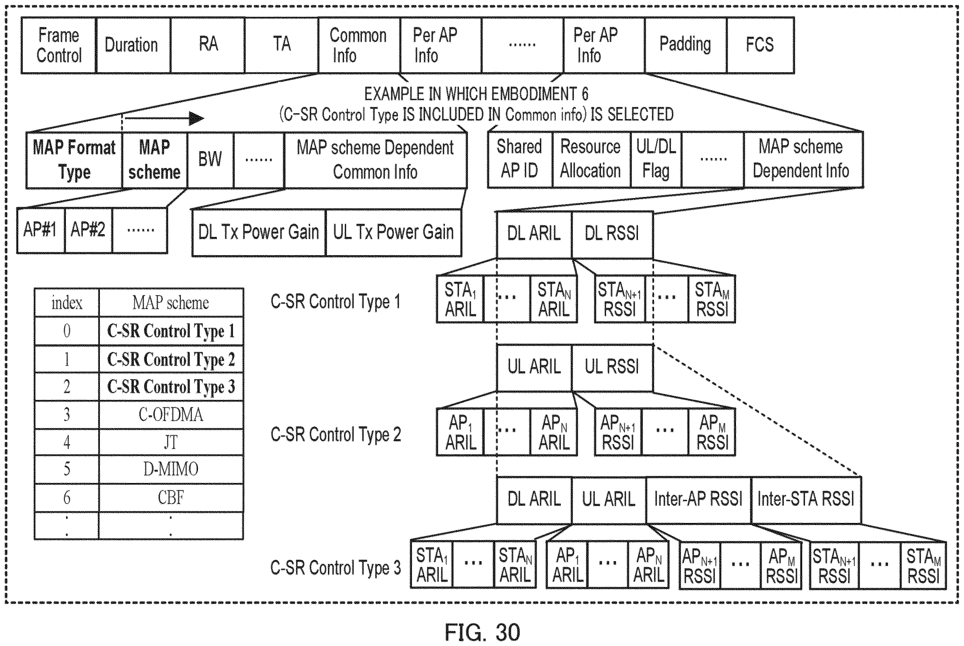

FIG. 30 is a diagram showing an example of the format of an MAP Trigger frame according to Embodiment 10. FIG. 30 shows an example of the definition of an MAP Scheme subfield together.

As shown in FIG. 30, an MAP Format Type in which information indicating the type of format of MAP designation is set is contained in the Common Info. The MAP Format Type contains information to determine the subsequent format.

A format type contains, for example, the formats described in Embodiment 6 to Embodiment 9. The example of FIG. 30 is an example in which the format of Embodiment 6 is selected.

The formats shown in Embodiment 6 to Embodiment 9 respectively have the following configurations.

Embodiment 6: An MAP coordination scheme and a C-SR Control Type of each Shared AP are designated in the MAP scheme field of the Common Info.

Embodiment 7: An MAP coordination scheme and a C-SR Control Type are designated in the Per AP Info.

Embodiment 8: The Per STA info is disposed in the Per AP Info, and an MAP coordination scheme and a C-SR Control Type are designated in the Per STA info.

Embodiment 9: An MAP coordination scheme and a C-SR Control Type are designated in the Per STA info.

Selection criteria of the above-described format type are not limited. For example, a format with a small total number of bits and/or a format with easy processing is selected. A format may be selected according to a situation in which an MAP coordination scheme and a C-SR Control Type are set for each Shared AP and STAs under the command of the Shared AP. When, for example, an MAP coordination scheme and a C-SR Control Type are different Shared AP by Shared AP but an MAP coordination scheme and a C-SR Control Type are the same in each AP, the format of Embodiment 6 or Embodiment 7 may be selected. When an MAP coordination scheme is different Shared AP by Shared AP and STA by STA under the command of the Shared AP, the format of Embodiment 8 may be selected.

As described above, in Embodiment 10, a format with relatively easy processing and/or a format with a relatively small signaling amount may be selected or a format may be selected according to a situation in which an MAP coordination scheme and a C-SR Control Type are set for each Shared AP and an STA under the command of the Shared AP, so a format appropriate to a condition can be selected.

(Embodiment 11)

The configuration of APs and STAs according to Embodiment 11 may be similar to that of Embodiment 1.

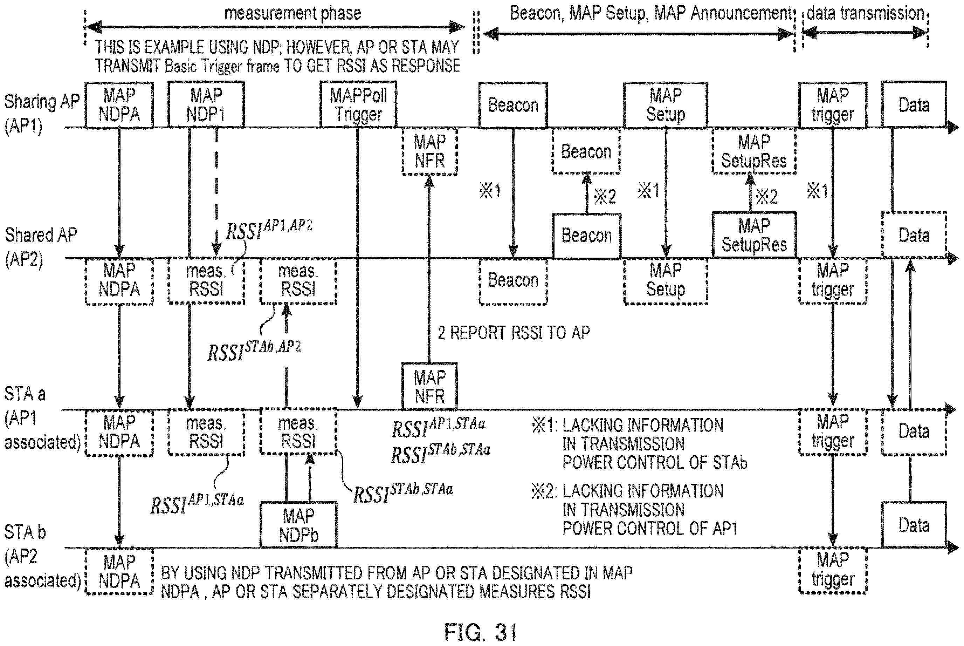

FIG. 31 is a diagram showing an example of a control procedure according to Embodiment 11. FIG. 31 shows an example of C-SR control type 3 (C-SR Control Type 3).

Embodiment 11 takes a mode in which a C-SR Control Information Element of Embodiment 1 or Embodiment 2 is contained in a specific frame. For example, the specific frame may be at least one of a Beacon frame, an MAP Setup frame, an MAP Announcement frame, and an MAP Trigger frame.

For example, regarding the Beacon frame, a node may measure RSSI and the like between nodes, then determine transmission power, and make a Beacon frame to include a C-SR Control Information Element.

For example, regarding the MAP Setup frame and/or the MAP Announcement frame, a node may measure RSSI and the like between nodes, then determine transmission power, and provide a notification of a C-SR Control Information Element in an MAP setting notification frame (the MAP Setup frame or the MAP Announcement frame). Timing of notification is not limited. For example, a notification of the MAP setting notification frame may be provided after RSSI and the like are measured with an NDP, or the notification may be provided during data transmission and reception. A flag designating a response from a node that needs information on C-SR control may be provided in the MAP setting notification frame. In this case, a corresponding Node (for example, a node that needs information on C-SR control) may be configured to provide the MAP setting notification frame containing information on C-SR control upon receiving instructions of the flag as a response.

For example, regarding an MAP Trigger frame, a notification of information on C-SR control may be provided in the MAP Trigger frame coming before data transmission and reception.

The C-SR Control Information Element may be configured to include a plurality of C-SR Control Types. A notification of the C-SR Control Information Element may be provided at a time in a Management frame, such as a Beacon frame and/or an Action frame.

In an MAP Setup frame and/or an MAP Announcement frame of a Setup phase, information may be exchanged between APs. In this case, in an MAP Trigger, information may be exchanged further with STAs. An inter-AP communication MAP Trigger frame and an AP-STA communication MAP Trigger frame may be provided, and a notification of information may be provided in two steps.

As described above, since the specific frame contains a C-SR Control Information Element, it is possible to suppress an increase in the information content of signaling and efficiently signal C-SR control information according to, for example, a situation in a case where a communication environment has changed.

(Embodiment 12)

The configuration of APs and STAs according to Embodiment 12 may be similar to that of Embodiment 1.

In Embodiment 12, a support range of C-SR Control Type is changed in accordance with a Device Class (Class A or B) of a node. A terminal (for example, STA) of which the Device Class is Class A, the terminal is written as Class A terminal, and a terminal (for example, STA) of which the Device Class is Class B is written as Class B terminal. A Class A terminal is a terminal required for high accuracy in the accuracy of transmission power and/or RSSI measurement accuracy. A Class B terminal is a terminal not required for accuracy as compared to a Class A terminal in the accuracy of transmission power and/or RSSI measurement accuracy. For example, a Class B terminal may be a cheap-edition terminal.

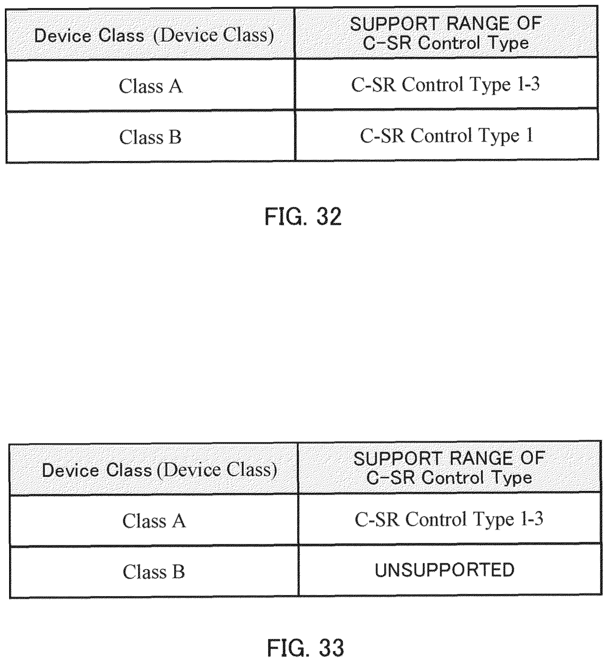

FIGS. 32 and 33 are tables showing a definition example of a Device Class and a support range of a C-SR Control Type according to Embodiment 12. As shown in FIG. 32, for example, a Class A terminal to which a request for the accuracy of transmission power and/or RSSI measurement accuracy is high is allowed to operate in C-SR Control Types 1 to 3. On the other hand, a Class B terminal to which a request for the accuracy of transmission power and/or RSSI measurement accuracy is not high is allowed to operate in C-SR Control Type 1. Alternatively, as shown in FIG. 33, a Class A terminal may be allowed to operate in C-SR Control Types 1 to 3, and a Class B terminal may be configured not to support C-SR control.

As described above, when the support range of the C-SR Control Type is changed according to a Device Class (Class A/B) of which the accuracy of transmission power and/or RSSI measurement accuracy is different, it is possible to limit the support range of the Class B terminal of which the accuracy of transmission power and/or RSSI measurement accuracy is low, so it is possible to avoid adverse effect on C-SR control and prevent a decrease in throughput.

(Other Embodiments)

In the above-described embodiments, an example of notification information on an MAP in an MAP Trigger frame (for example, control information on C-SR control) has been described; however, a notification of information to be provided is not limited to the information described in the above-described embodiments. For example, another piece of information may be added or at least part of defined information may be deleted.

In the above-described embodiments, a definition example of the Frame Control field, a definition example of the Trigger Type subfield, and a definition example of the MAP Scheme have been described; however, the Frame Control field, the Trigger Type subfield, and the MAP Scheme are not limited to these definition examples and may be defined as other values.

In the above-described embodiments, the type of C-SR control has been described as the term "C-SR control type"; however, the term is not limited thereto. The type of C-SR control may be referred to as another term.

In each of the above-described embodiments, an AP that provides instructions for coordination communication and an AP that receives instructions for coordination communication have been respectively described by using the term "Sharing AP" and the term "Shared AP"; however, the terms are not limited thereto. Other terms may be used.

In each of the above-described embodiments, in a non-limiting example, the description has been made based on the format of 11be; however, a format to which an embodiment of the present disclosure is applicable is not limited to the format of 11be. An embodiment of the present disclosure may be, for example, applied to IEEE 802.11bd (NGV (Next Generation V2X)) that is the next-generation standards of IEEE 802.11p that is invehicle standards.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A communication apparatus according to one example of the present disclosure includes: a control circuit that determines control information that supports a control type that is set for inter-base station coordination communication; and a transmitter circuit that transmits the control information.

In the communication apparatus according to one example of the present disclosure, the control circuit determines first information included in the control information and dependent on the control type.

In the communication apparatus according to one example of the present disclosure, the first information includes second information common to a plurality of the communication apparatuses and/or third information individual to each of the plurality of communication apparatuses.

In the communication apparatus according to one example of the present disclosure, information indicating the control type is set in a field that is a component of a frame of the control information, and the field is at least one of a Frame Control field and/or a Trigger Type field.

In the communication apparatus according to one example of the present disclosure, information indicating the control type is contained in a frame of the control information and is set in at least one of a first field in which information common to a plurality of the communication apparatuses is set, a second field in which information of each of base stations is set, a third field in which information of each of terminals is set, and a fourth field in which information of each of the terminals is set in a field in which information of each of the base stations is set.

In the communication apparatus according to one example of the present disclosure, the control circuit switches a field in which the information indicating the control type is set, among the first field to the fourth field.

In the communication apparatus according to one example of the present disclosure, the control information is contained in at least one of a beacon frame, a frame used to set inter-base station coordination communication, and a frame that is a trigger of inter-base station coordination communication.

In the communication apparatus according to one example of the present disclosure, the control circuit identifies the control type according to performance of the communication apparatus.

In the communication apparatus according to one example of the present disclosure, the inter-base station coordination communication is Coordinated Spatial Reuse.

A communication method according to one example of the present disclosure includes: determining, by a communication apparatus, control information that supports a control type that is set for inter-base station coordination communication; and transmitting, by the communication apparatus, the control information.

The disclosure of Japanese Patent Application No. 2021-197255, filed December 3, 2021, including the specification, drawings, and abstract, is incorporated herein by reference in its entirety.


Industrial Applicability

An exemplary embodiment of the present disclosure is useful for radio communication systems.

Reference Signs List

100 AP
101 Controller
102 STA-specific control signal generator
103 AP-specific control signal generator
104, 203 Transmission signal generator
105, 201 Radio transmitter and receiver
106, 202 Received signal demodulator/decoder
200 STA


**Claims**

1. A communication apparatus, comprising:

   a control circuit that determines control information that supports a control type that is set for inter-base station coordination communication; and
   a transmitter circuit that transmits the control information.

2. The communication apparatus according to Claim 1, wherein
   the control circuit determines first information included in the control information and dependent on the control type.

3. The communication apparatus according to Claim 2, wherein
   the first information includes second information common to a plurality of the communication apparatuses and/or third information individual to each of the plurality of communication apparatuses.

4. The communication apparatus according to Claim 2, wherein

   information indicating the control type is set in a field that is a component of a frame of the control information, and
   the field is at least one of a Frame Control field and/or a Trigger Type field.

**5.** The communication apparatus according to Claim 2, wherein
information indicating the control type is contained in a frame of the control information and is set in at least one of a first field in which information common to a plurality of the communication apparatuses is set, a second field in which information of each of base stations is set, a third field in which information of each of terminals is set, and a fourth field in which information of each of the terminals is set in a field in which information of each of the base stations is set.

**6.** The communication apparatus according to Claim 5, wherein
the control circuit switches a field in which the information indicating the control type is set, among the first field to the fourth field.

**7.** The communication apparatus according to Claim 1, wherein
the control information is contained in at least one of a beacon frame, a frame used to set inter-base station coordination communication, and a frame that is a trigger of inter-base station coordination communication.

**8.** The communication apparatus according to Claim 1, wherein
the control circuit identifies the control type according to performance of the communication apparatus.

**9.** The communication apparatus according to Claim 1, wherein
the inter-base station coordination communication is Coordinated Spatial Reuse.

**10.** A communication method, comprising:

determining, by a communication apparatus, control information that supports a control type that is set for inter-base station coordination communication; and
transmitting, by the communication apparatus, the control information.

Sharing AP
(AP1)

Shared AP
(AP2)

Coordination

STA a
(AP1 associated)

STA b
(AP2 associated)

FIG. 1

<u>100</u>

<u>101</u>                                      <u>105</u>

| CONTROLLER | ←→ | RADIO TRANSMITTER AND RECEIVER |

FIG. 2

FIG. 3

EP 4 443 958 A1

200

FIG. 4

| CONTROL TYPE | COORDINATION TARGET | AP–AP/AP–STA NOTIFICATION INFORMATION | | | | | | | |
|---|---|---|---|---|---|---|---|---|---|
| | | DL ARIL | UL ARIL | DL RSSI | UL RSSI | INTER–AP RSSI | INTER–STA RSSI | DL Tx Power Gain | UL Tx Power Gain |
| 1 | DL/DL [AP to STA] | ● | - | ● | - | - | - | ● | - |
| 2 | UL/UL [STA to AP] | - | ● | - | ● | - | - | - | ● |
| 3 | DL/UL [AP to AP, STA to STA] | ● | ● | - | - | ● | ● | ● | ● |

FIG. 5

Sharing AP1 DL Coverage w/o C-SR

Shared AP2 DL Coverage w/o C-SR

Sharing AP1 DL Coverage w/ C-SR

Shared AP2 DL Coverage w/ C-SR

Transmit Power Control

Transmit Power Control

Coordination

Sharing AP (AP1)

Shared AP (AP2)

Interference Suppression

STA a (AP1 associated)

STA b (AP2 associated)

Adequate SINR

FIG. 6

FIG. 7

FIG. 8

CONTENT TO BE PROVIDED IN setup phase MAY BE PROVIDED BY Beacon frame or MAP Trigger frame / Announcement frame

STA a UL Coverage w/o C-SR

Adequate SINR

STA b UL Coverage w/o C-SR

Sharing AP (AP1)

Shared AP (AP2)

Transmit Power Control

Transmit Power Control

Coordination

Interference Suppression

STA a (AP1 associated)

STA b (AP2 associated)

STA a UL Coverage w/ C-SR

STA b UL Coverage w/ C-SR

FIG. 9

EP 4 443 958 A1

RECEIVED POWER OF AP1 (STA a associated)

$RSSI^{STAa,AP1}$

$RSSI^{STAb,AP1}$

STAa

STAb

STAa

STAb

$RSSI^{STAa,AP2}$

$RSSI^{STAb,AP2}$

RECEIVED POWER OF AP2 (STA b associated)

FIG. 10

EP 4 443 958 A1

measurement phase | setup phase | data transmission

THIS IS EXAMPLE USING NDP; HOWEVER,
EACH AP MAY TRANSMIT Trigger frame, and RSSI MAY
BE MEASURED BY USING TB PPDU FOR Trigger frame

$ARIL_{DL}^{STAa}$

Sharing AP
(AP1)

EACH AP MEASURES RSSI BY USING NDP
OF EACH STA

| MAP SetupReq |

$ARIL_{DL}^{STAb}$

| MAP trigger |

| MAP NDPA | | meas. RSSI | | meas. RSSI |

LACKING INFORMATION IN TRANSMISSION
POWER CONTROL OF STAb

| Data |

$RSSI^{STAa,AP1}$

$RSSI^{STAb,AP1}$

$ARIL_{UL}^{AP1}$
$Gain_{C-SR}^{STAa}$
$RSSI^{STAb,AP1}$

Shared AP
(AP2)

| MAP SetupRes |

| MAP NDPA | | meas. RSSI | | meas. RSSI |

| MAP SetupReq |

LACKING INFORMATION
IN TRANSMISSION POWER
CONTROL OF STAa

| MAP trigger |

| Data |

$RSSI^{STAb,AP2}$

$RSSI^{STAa,AP2}$

$ARIL_{UL}^{AP2}$
$Gain_{C-SR}^{STAb}$
$RSSI^{STAa,AP2}$

STA a
(AP1
associated)

| MAP NDPA | | MAP NDPa |

| MAP SetupRes |

| MAP trigger |

| Data |

STA b
(AP2
associated)

| MAP NDPb |

| MAP NDPA |

| MAP SetupReq |

| MAP trigger |

| Data |

CONTENT TO BE PROVIDED IN setup phase MAY BE PROVIDED
BY Beacon frame or MAP Trigger frame / Announcement frame

FIG. 11

FIG. 12

EP 4 443 958 A1

EP 4 443 958 A1

RECEIVED
POWER OF STA a
(AP1 associated)

$RSSI^{AP1,STAa}$

$RSSI^{STAb,STAa}$

AP1

STAb

AP1

STAb

$RSSI^{AP1,AP2}$

$RSSI^{STAb,AP2}$

RECEIVED
POWER OF AP2
(STA b associated)

FIG. 13

EP 4 443 958 A1

measurement phase | setup phase | data transmission

THIS IS EXAMPLE USING NDP; HOWEVER, AP OR STA MAY TRANSMIT Basic Trigger frame TO GET RSSI AS RESPONSE

$ARIL_{DL}^{STAa}$

**Sharing AP (AP1)**

MAP NDPA | MAP NDP1 | MAP Poll Trigger | MAP SetupReq | $ARIL_{UL}^{AP2}$ | MAP trigger | Data

MAP NFR | LACKING INFORMATION IN TRANSMISSION POWER CONTROL OF STAb | MAP SetupRes

**Shared AP (AP2)**

$RSSI^{AP1,AP2}$

$ARIL_{DL}^{STAa}$
$Gain_{C-SR}^{AP1}$
$RSSI^{STAb,STAa}$

MAP SetupRes

Data

MAP NDPA | meas. RSSI | meas. RSSI | MAP SetupReq | MAP trigger

REPORT RSSI TO AP

$RSSI^{STAb,AP2}$

MAP NFR

LACKING INFORMATION IN TRANSMISSION POWER CONTROL OF AP1

**STA a (AP1 associated)**

$RSSI^{AP1,STAa}$
$RSSI^{STAb,STAa}$

$ARIL_{UL}^{AP2}$
$Gain_{C-SR}^{STAb}$
$RSSI^{AP1,AP2}$

MAP NDPA | meas. RSSI | meas. RSSI | MAP trigger | Data

$RSSI^{AP1,STAa}$

MAP NDPb

$RSSI^{STAb,STAa}$

**STA b (AP2 associated)**

Data

MAP NDPA | BY USING NDP TRANSMITTED FROM AP OR STA DESIGNATED IN MAP NDPA, AP OR STA SEPARATELY DESIGNATED MEASURES RSSI | MAP SetupReq | MAP trigger

CONTENT TO BE PROVIDED IN setup phase MAY BE PROVIDED BY Beacon frame or MAP Trigger frame / Announcement frame

FIG. 14

EP 4 443 958 A1

| Element ID | Length | C-SR Control Type | C-SR Control Type Dependent Info |
|---|---|---|---|

C-SR Control Type 1

| DL ARIL | DL RSSI | DL Tx Power Gain |
|---|---|---|

| $STA_1$ ARIL | ... | $STA_N$ ARIL | $STA_{N+1}$ RSSI | ... | $STA_M$ RSSI |
|---|---|---|---|---|---|

C-SR Control Type 2

| UL ARIL | UL RSSI | UL Tx Power Gain |
|---|---|---|

| $AP_1$ ARIL | ... | $AP_N$ ARIL | $AP_{N+1}$ RSSI | ... | $AP_M$ RSSI |
|---|---|---|---|---|---|

C-SR Control Type 3

| DL ARIL | UL ARIL | Inter-AP RSSI | Inter-STA RSSI | DL Tx Power Gain | UL Tx Power Gain |
|---|---|---|---|---|---|

| $STA_1$ ARIL | ... | $STA_N$ ARIL | $AP_1$ ARIL | ... | $AP_N$ ARIL | $AP_{N+1}$ RSSI | ... | $AP_M$ RSSI | $STA_{N+1}$ RSSI | ... | $STA_M$ RSSI |
|---|---|---|---|---|---|---|---|---|---|---|---|

$STA_1, \cdots, STA_N$: TARGET STA OF WHICH QUALITY IS GUARANTEED
$STA_{N+1}, \cdots, STA_M$: TARGET STA OF WHICH INTERFERENCE IS SUPPRESSED
$AP_1, \cdots, AP_N$: TARGET AP OF WHICH QUALITY IS GUARANTEED
$AP_{N+1}, \cdots, AP_M$: TARGET AP OF WHICH INTERFERENCE IS SUPPRESSED

FIG. 15

| C-SR Control Type field value | Description |
|---|---|
| 0 | **C-SR Control Type 1: DL only**<br>subfield contents:<br>　DL ARIL, DL RSSI, DL Tx Power Gain |
| 1 | **C-SR Control Type 2: UL only**<br>subfield contents:<br>　UL ARIL, UL RSSI, UL Tx Power Gain |
| 2 | **C-SR Control Type 3: DL and UL mixed**<br>subfield contents:<br>　DL ARIL, UL ARIL, Inter-AP RSSI, Inter-STA RSSI<br>　DL Tx Power Gain, UL Tx Power Gain |
| 3-255 | Reserved |

FIG. 16

EP 4 443 958 A1

FIG. 17

STA₁, ⋯ , STAN: TARGET STA OF WHICH QUALITY IS GUARANTEED
STAN+1, ⋯ , STAM: TARGET STA OF WHICH INTERFERENCE IS SUPPRESSED
AP₁, ⋯ , APN: TARGET AP OF WHICH QUALITY IS GUARANTEED
APN+1, ⋯ , APM: TARGET AP OF WHICH INTERFERENCE IS SUPPRESSED

EP 4 443 958 A1

| C-SR Control Type field value | Description |
|---|---|
| 0 | **C-SR Control Type 1: DL only**<br>C-SR Control Type Dependent Common Info:<br>  DL Tx Power Gain<br>C-SR Control Type Dependent Info:<br>  DL ARIL, DL RSSI |
| 1 | **C-SR Control Type 2: UL only**<br>C-SR Control Type Dependent Common Info:<br>  UL Tx Power Gain<br>C-SR Control Type Dependent Info:<br>  UL ARIL, UL RSSI |
| 2 | **C-SR Control Type 3: DL and UL mixed**<br>C-SR Control Type Dependent Common Info:<br>  DL Tx Power Gain, UL Tx Power Gain<br>C-SR Control Type Dependent Info:<br>  DL ARIL, UL ARIL, Inter-AP RSSI, Inter-STA RSSI |
| 3-255 | Reserved |

FIG. 18

EP 4 443 958 A1

| Frame Control | Duration | RA | TA | Common Info | Per Node Info | ...... | Per Node Info | Padding | FCS |

| BW | ...... | MAP scheme Dependent Common Info |

| Shared AP ID | Resource Allocation | UL/DL Flag | ...... | MAP scheme Dependent Info |

**C-SR Control Type 1**

| DL Tx Power Gain |

| DL ARIL | DL RSSI |

| STA$_1$ ARIL | ... | STA$_N$ ARIL | STA$_{N+1}$ RSSI | ... | STA$_M$ RSSI |

**C-SR Control Type 2**

| UL Tx Power Gain |

| UL ARIL | UL RSSI |

| AP$_1$ ARIL | ... | AP$_N$ ARIL | AP$_{N+1}$ RSSI | ... | AP$_M$ RSSI |

**C-SR Control Type 3**

| DL Tx Power Gain | UL Tx Power Gain |

| DL ARIL | UL ARIL | Inter-AP RSSI | Inter-STA RSSI |

| STA$_1$ ARIL | ... | STA$_N$ ARIL | AP$_1$ ARIL | ... | AP$_N$ ARIL | AP$_{N+1}$ RSSI | ... | AP$_M$ RSSI | STA$_{N+1}$ RSSI | ... | STA$_M$ RSSI |

FIG. 19

| Type value B3 B2 | Type description | Subtype value B7 B6 B5 B4 | Subtype description |
|---|---|---|---|
| 01 | Control | 0000 ~~0001~~ | C-SR Control Type 1 |
| 01 | Control | 0001 | C-SR Control Type 2 |
| 01 | Control | 0010 | Trigger |
| 01 | Control | 0011 | TACK |
| 01 | Control | 0100 | Beamforming Report Poll |
| 01 | Control | 0101 | VHT/HE NDP Announcement |
| 01 | Control | 0110 | Control Frame Extension |
| 01 | Control | 0111 | Control Wrapper |
| 01 | Control | 1000 | Block Ack Request (BlockAckReq) |
| 01 | Control | 1001 | Block Ack (BlockAck) |
| 01 | Control | 1010 | PS-Poll |
| 01 | Control | 1011 | RTS |
| 01 | Control | 1100 | CTS |
| 01 | Control | 1101 | Ack |
| 01 | Control | 1110 | CF-End |
| 01 | Control | 1111 | C-SR Control Type 3 |

FIG. 20

| Type value<br>B3 B2 | Subtype value<br>B7 B6 B5 B4 | Control Frame<br>Extension value<br>B11 B10 B9 B8 | Description |
|---|---|---|---|
| 01 | 0110 | 0000 | Sector Ack |
| 01 | 0110 | 0001 | Block Ack Schedule |
| 01 | 0110 | 0010 | Poll |
| 01 | 0110 | 0011 | SPR |
| 01 | 0110 | 0100 | Grant |
| 01 | 0110 | 0101 | DMG CTS |
| 01 | 0110 | 0110 | DMG DTS |
| 01 | 0110 | 0111 | Grant Ack |
| 01 | 0110 | 1000 | SSW |
| 01 | 0110 | 1001 | SSW-Feedback |
| 01 | 0110 | 1010 | SSW-Ack |
| 01 | 0110 | 1011 | TDD Beamforming |
| 01 | 0110 | 1100~~-1111~~ | C-SR Control Type 1 |
| 01 | 0110 | 1101 | C-SR Control Type 2 |
| 01 | 0110 | 1110 | C-SR Control Type 3 |
| 01 | 0110 | 1111 | Reserved |

FIG. 21

FIG. 22

Frame Control | Duration | RA | TA | Common Info | Per Node Info | ...... | Per Node Info | Padding | FCS

Trigger Type

TriggerTypeDependent CommonInfo | ...... | BW

Shared AP ID | Resource Allocation | UL/DL Flag | ...... | Trigger Type Dependent Info

C-SR Control Type 1: DL Tx Power Gain

C-SR Control Type 2: UL Tx Power Gain

C-SR Control Type 3: DL Tx Power Gain | UL Tx Power Gain | . . .

DL ARIL | DL RSSI

STA$_1$ ARIL | ...... | STA$_N$ ARIL | STA$_{N+1}$ RSSI | ...... | STA$_M$ RSSI

UL ARIL | UL RSSI

AP$_1$ ARIL | ...... | AP$_N$ ARIL | AP$_{N+1}$ RSSI | ...... | AP$_M$ RSSI

DL ARIL | UL ARIL | Inter-AP RSSI | Inter-STA RSSI

STA$_1$ ARIL | ...... | STA$_N$ ARIL | AP$_1$ ARIL | ...... | AP$_N$ ARIL | AP$_{N+1}$ RSSI | ...... | AP$_M$ RSSI | STA$_{N+1}$ RSSI | ...... | STA$_M$ RSSI

| Trigger Type subfield value | Trigger frame variant |
|---|---|
| 0 | Basic |
| 1 | Beamforming Report Poll (BFRP) |
| 2 | MU-BAR |
| 3 | MU-RTS |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8 | C-SR Control Type 1 |
| 9 | C-SR Control Type 2 |
| 10 | C-SR Control Type 3 |
| 11-15 | Reserved |

FIG. 23

| Frame Control | Duration | RA | TA | Common Info | Per Node Info | ...... | Per Node Info | Padding | FCS |

| Trigger Type | BW | ...... | TriggerTypeDependent CommonInfo |

| Shared AP ID | Resource Allocation | UL/DL Flag | ...... | Trigger Type Dependent Info |

| C-SR Control Type | ...... | C-SR Control Type Dependent Common Info |

C-SR Control Type 1

| DL Tx Power Gain |

C-SR Control Type 2

| UL Tx Power Gain |

C-SR Control Type 3

| DL Tx Power Gain | UL Tx Power Gain |

| DL ARIL | DL RSSI |

| STA$_1$ ARIL | ... | STA$_N$ ARIL | STA$_{N+1}$ RSSI | ... | STA$_M$ RSSI |

| UL ARIL | UL RSSI |

| AP$_1$ ARIL | ... | AP$_N$ ARIL | AP$_{N+1}$ RSSI | ... | AP$_M$ RSSI |

| DL ARIL | UL ARIL | Inter-AP RSSI | Inter-STA RSSI |

| STA$_1$ ARIL | ... | STA$_N$ ARIL | AP$_1$ ARIL | ... | AP$_N$ ARIL | AP$_{N+1}$ RSSI | ... | AP$_M$ RSSI | STA$_{N+1}$ RSSI | ... | STA$_M$ RSSI |

FIG. 24

| Trigger Type subfield value | Trigger frame variant |
|---|---|
| 0 | Basic |
| 1 | Beamforming Report Poll (BFRP) |
| 2 | MU-BAR |
| 3 | MU-RTS |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8 | Multi-AP C-SR |
| 9-15 | Reserved |

FIG. 25

EP 4 443 958 A1

| Frame Control | Duration | RA | TA | **Common Info** | Per AP Info | ...... | Per AP Info | Padding | FCS |
|---|---|---|---|---|---|---|---|---|---|

| **MAP scheme** | BW | ...... | MAP scheme Dependent Common Info |
|---|---|---|---|

| Shared AP ID | Resource Allocation | UL/DL Flag | ...... | MAP scheme Dependent Info |
|---|---|---|---|---|

| AP#1 | AP#2 | ...... |
|---|---|---|

| DL Tx Power Gain | UL Tx Power Gain |
|---|---|

MAP scheme (C-SR Control Type) FOR EACH OF ALL APs IS DESIGNATED IN MAP scheme field IN Common info

| index | MAP scheme |
|---|---|
| 0 | **C-SR Control Type 1** |
| 1 | **C-SR Control Type 2** |
| 2 | **C-SR Control Type 3** |
| 3 | C-OFDMA |
| 4 | JT |
| 5 | D-MIMO |
| 6 | CBF |
| . | . |
| . | . |

C-SR Control Type 1

| DL ARIL | DL RSSI |
|---|---|

| $STA_1$ ARIL | ... | $STA_N$ ARIL | $STA_{N+1}$ RSSI | ... | $STA_M$ RSSI |
|---|---|---|---|---|---|

C-SR Control Type 2

| UL ARIL | UL RSSI |
|---|---|

| $AP_1$ ARIL | ... | $AP_N$ ARIL | $AP_{N+1}$ RSSI | ... | $AP_M$ RSSI |
|---|---|---|---|---|---|

C-SR Control Type 3

| DL ARIL | UL ARIL | Inter-AP RSSI | Inter-STA RSSI |
|---|---|---|---|

| $STA_1$ ARIL | ... | $STA_N$ ARIL | $AP_1$ ARIL | ... | $AP_N$ ARIL | $AP_{N+1}$ RSSI | ... | $AP_M$ RSSI | $STA_{N+1}$ RSSI | ... | $STA_M$ RSSI |
|---|---|---|---|---|---|---|---|---|---|---|---|

FIG. 26

EP 4 443 958 A1

| Frame Control | Duration | RA | TA | Common Info | **Per AP Info** | ...... | Per AP Info | Padding | FCS |

| Shared AP ID | **MAP scheme** | Resource Allocation | UL/DL Flag | ...... | MAP scheme Dependent Info |

| index | MAP scheme |
|---|---|
| 0 | **C-SR Control Type 1** |
| 1 | **C-SR Control Type 2** |
| 2 | **C-SR Control Type 3** |
| 3 | C-OFDMA |
| 4 | JT |
| 5 | D-MIMO |
| 6 | CBF |
| . | . |
| . | . |

**C-SR Control Type 1**

| DL ARIL | DL RSSI | DL Tx Power Gain |

| $STA_1$ ARIL | .. | $STA_N$ ARIL | $STA_{N+1}$ RSSI | ... | $STA_M$ RSSI |

**C-SR Control Type 2**

| UL ARIL | UL RSSI | UL Tx Power Gain |

| $AP_1$ ARIL | .. | $AP_N$ ARIL | $AP_{N+1}$ RSSI | ... | $AP_M$ RSSI |

**C-SR Control Type 3**

| DL ARIL | UL ARIL | Inter-AP RSSI | Inter-STA RSSI | DL Tx Power Gain | UL Tx Power Gain |

| $STA_1$ ARIL | ... | $STA_N$ ARIL | $AP_1$ ARIL | ... | $AP_N$ ARIL | $AP_{N+1}$ RSSI | ... | $AP_M$ RSSI | $STA_{N+1}$ RSSI | ... | $STA_M$ RSSI |

FIG. 27

| Frame Control | Duration | RA | TA | **Common Info** | Per AP Info | ...... | **Per AP Info** | Padding | FCS |
|---|---|---|---|---|---|---|---|---|---|

| # of STAs | ... | **Total MAP scheme** | ... |
|---|---|---|---|

| AP ID | **Per STA Info** | Per STA Info | ...... |
|---|---|---|---|

| AP#1 | AP#2 | ...... |
|---|---|---|

| STA ID | **MAP scheme Index** | Resource Allocation | UL/DL Flag | ...... | MAP scheme Dependent Info |
|---|---|---|---|---|---|

C-SR Control Type 1

| DL ARIL | DL RSSI | DL Tx Power Gain |
|---|---|---|

| $STA_1$ ARIL | ... | $STA_N$ ARIL | $STA_{N+1}$ RSSI | ... | $STA_M$ RSSI |
|---|---|---|---|---|---|

C-SR Control Type 2

| UL ARIL | UL RSSI | UL Tx Power Gain |
|---|---|---|

| $AP_1$ ARIL | ... | $AP_N$ ARIL | $AP_{N+1}$ RSSI | ... | $AP_M$ RSSI |
|---|---|---|---|---|---|

C-SR Control Type 3

| DL ARIL | UL ARIL | Inter-AP RSSI | Inter-STA RSSI | DL Tx Power Gain | UL Tx Power Gain |
|---|---|---|---|---|---|

| $STA_1$ ARIL | ... | $STA_N$ ARIL | $AP_1$ ARIL | ... | $AP_N$ ARIL | $AP_{N+1}$ RSSI | ... | $AP_M$ RSSI | $STA_{N+1}$ RSSI | ... | $STA_M$ RSSI |
|---|---|---|---|---|---|---|---|---|---|---|---|

FIG. 28A

## Total MAP scheme IN Common info

| Total MAP scheme |
|---|

| MAP scheme Element 1 | MAP scheme Element 2 | ...... |
|---|---|---|

| MAP scheme Element value | MAP scheme Element variant |
|---|---|
| 0 | **C-SR Control Type 1** |
| 1 | **C-SR Control Type 2** |
| 2 | **C-SR Control Type 3** |
| 3 | C-OFDMA |
| 4 | JT |
| 5 | D-MIMO |
| 6 | CBF |
| 7 | Reserved |

## MAP scheme index IN Per STA info

| MAP scheme Index |
|---|

| MAP scheme Index value | MAP scheme Index variant |
|---|---|
| 0 | MAP scheme Element 1 |
| 1 | MAP scheme Element 2 |
| ... | ... |

MAP scheme Index variant
= MAP scheme Element (MAP scheme Index value + 1)

FIG. 28B

EP 4 443 958 A1

| Frame Control | Duration | RA | TA | Common Info | Per STA Info | ...... | **Per STA Info** | Padding | FCS |
|---|---|---|---|---|---|---|---|---|---|

| ...... | BW | ...... |
|---|---|---|

| STA ID | **MAP scheme** | Resource Allocation | UL/DL Flag | ...... | MAP scheme Dependent Info |
|---|---|---|---|---|---|

| index | MAP scheme |
|---|---|
| 0 | **C-SR Control Type 1** |
| 1 | **C-SR Control Type 2** |
| 2 | **C-SR Control Type 3** |
| 3 | C-OFDMA |
| 4 | JT |
| 5 | D-MIMO |
| 6 | CBF |
| . | . |

**C-SR Control Type 1**

| DL ARIL | DL RSSI | DL Tx Power Gain |
|---|---|---|

| STA₁ ARIL | ... | STAₙ ARIL | STA_{N+1} RSSI | ... | STA_M RSSI |
|---|---|---|---|---|---|

**C-SR Control Type 2**

| UL ARIL | UL RSSI | UL Tx Power Gain |
|---|---|---|

| AP₁ ARIL | ... | APₙ ARIL | AP_{N+1} RSSI | ... | AP_M RSSI |
|---|---|---|---|---|---|

**C-SR Control Type 3**

| DL ARIL | UL ARIL | Inter-AP RSSI | Inter-STA RSSI | DL Tx Power Gain | UL Tx Power Gain |
|---|---|---|---|---|---|

| STA₁ ARIL | ... | STAₙ ARIL | AP₁ ARIL | ... | APₙ ARIL | AP_{N+1} RSSI | ... | AP_M RSSI | STA_{N+1} RSSI | ... | STA_M RSSI |
|---|---|---|---|---|---|---|---|---|---|---|---|

FIG. 29

EP 4 443 958 A1

| Frame Control | Duration | RA | TA | Common Info | Per AP Info | ...... | Per AP Info | Padding | FCS |
|---|---|---|---|---|---|---|---|---|---|

EXAMPLE IN WHICH EMBODIMENT 6
(C-SR Control Type IS INCLUDED IN Common info) IS SELECTED

| MAP Format Type | MAP scheme | BW | ...... | MAP scheme Dependent Common Info |
|---|---|---|---|---|

| Shared AP ID | Resource Allocation | UL/DL Flag | ...... | MAP scheme Dependent Info |
|---|---|---|---|---|

| AP#1 | AP#2 | ...... |
|---|---|---|

| DL Tx Power Gain | UL Tx Power Gain |
|---|---|

| DL ARIL | DL RSSI |
|---|---|

| index | MAP scheme |
|---|---|
| 0 | C-SR Control Type 1 |
| 1 | C-SR Control Type 2 |
| 2 | C-SR Control Type 3 |
| 3 | C-OFDMA |
| 4 | JT |
| 5 | D-MIMO |
| 6 | CBF |
| . | . |
| . | . |

C-SR Control Type 1

| STA$_1$ ARIL | ... | STA$_N$ ARIL | STA$_{N+1}$ RSSI | ... | STA$_M$ RSSI |
|---|---|---|---|---|---|

| UL ARIL | UL RSSI |
|---|---|

C-SR Control Type 2

| AP$_1$ ARIL | ... | AP$_N$ ARIL | AP$_{N+1}$ RSSI | ... | AP$_M$ RSSI |
|---|---|---|---|---|---|

| DL ARIL | UL ARIL | Inter-AP RSSI | Inter-STA RSSI |
|---|---|---|---|

C-SR Control Type 3

| STA$_1$ ARIL | ... | STA$_N$ ARIL | AP$_1$ ARIL | ... | AP$_N$ ARIL | AP$_{N+1}$ RSSI | ... | AP$_M$ RSSI | STA$_{N+1}$ RSSI | ... | STA$_M$ RSSI |
|---|---|---|---|---|---|---|---|---|---|---|---|

FIG. 30

FIG. 31

| Device Class (Device Class) | SUPPORT RANGE OF C-SR Control Type |
|---|---|
| Class A | C-SR Control Type 1-3 |
| Class B | C-SR Control Type 1 |

FIG. 32

| Device Class (Device Class) | SUPPORT RANGE OF C-SR Control Type |
|---|---|
| Class A | C-SR Control Type 1-3 |
| Class B | UNSUPPORTED |

FIG. 33

## INTERNATIONAL SEARCH REPORT

| International application No. |
|---|
| **PCT/JP2022/042562** |

| | |
|---|---|
| **A.** | **CLASSIFICATION OF SUBJECT MATTER** |
| | *H04W 28/16*(2009.01)i; *H04W 28/06*(2009.01)i; *H04W 84/12*(2009.01)i<br>FI:  H04W28/16; H04W28/06 110; H04W84/12 |

According to International Patent Classification (IPC) or to both national classification and IPC

| | |
|---|---|
| **B.** | **FIELDS SEARCHED** |

Minimum documentation searched (classification system followed by classification symbols)

H04B'/24-7/26, H04W4/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | Jason Yuchen Guo (Huawei Technologies), A unified transmission procedure for multi-AP coordination, IEEE 802.11-19/1102r0, IEEE mentor, 08 August 2019<br>pp. 2-4, 6 | 1–5, 7, 9–10 |
| Y | pp. 2-4, 6 | 8 |
| A | pp. 2-4, 6 | 6 |
| X | WO 2021/222374 A1 (INTERDIGITAL PATENT HOLDINGS, INC.) 04 November 2021 (2021-11-04)<br>paragraphs [0072], [0082] | 1-3, 5, 7-10 |
| Y | paragraphs [0072], [0082] | 4 |
| A | paragraphs [0072], [0082] | 6 |
| Y | Sharan Naribole (Samsung), Coordinated OFDMA protocol, IEEE 802.11-20/0277r0 , IEEE mentor, 2020.03.15<br>pp. 2, 3 | 8 |
| Y | WO 2021/176836 A1 (SONY GROUP CORP.) 10 September 2021 (2021-09-10)<br>paragraphs [0134], [0135] | 4 |

| | |
|---|---|
| ☐ Further documents are listed in the continuation of Box C. | ☑ See patent family annex. |

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 January 2023** | **24 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/042562**

| Patent document cited in search report | | | Publication date (day/month/year) | Patent family member(s) | Publication date (day/month/year) |
|---|---|---|---|---|---|
| WO | 2021/222374 | A1 | 04 November 2021 | (Family: none) | |
| WO | 2021/176836 | A1 | 10 September 2021 | CN 115152267 A paragraphs [0190], [0191] | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021197255 A

**Non-patent literature cited in the description**

- AP Coordination in EHT. *IEEE 802.11-19/0801r0*
- Coordinated Spatial Reuse Performance Analysis. *IEEE 802.11-19/1534r1*
- Coordinated Spatial Reuse Operation. *IEEE 802.11-20/0033r1*
- Multi-AP coordination for spatial reuse. *IEEE 802.11-20/0107r1*
- Coordinated Spatial Reuse Procedure. *IEEE 802.11-20/0410r4*
- Coordinated Spatial Reuse Protocol. *IEEE 802.11-20/0576r1*
- Coordinated Spatial Reuse: Focus on Downlink. *IEEE 802.11-20/0590r5*
- On Joint C-SR and C-OFDMAM-AP Transmission. *IEEE 802.11-20/1399r1*